# EUROPEAN PATENT APPLICATION

(11) **EP 4 311 203 A1**
(43) Date of publication of application: **24.01.2024**
(21) Application number: 22794285.1
(22) Date of filing: 18.02.2022
(51) Int. Cl.: H04L 67/01

(54) **COMMUNICATION METHOD AND COMMUNICATION APPARATUS**

(30) Priority: 25.04.2021 CN 202110449312
(71) Applicant: Huawei Technologies Co., Ltd., Shenzhen, Guangdong 518129 (CN)
(72) Inventor: QIANG, Li, Shenzhen, Guangdong 518129 (CN); CHANG, Junren, Shenzhen, Guangdong 518129 (CN)
(74) Representative: Körber, Martin Hans
(86) International application number: PCT/CN2022/076884
(87) International publication number: WO 2022/227805

(57) **Abstract**

This application provides a communication method and a communication apparatus. In the method, a first device may indicate, to a second device, that the first device is in a first mode. After the second device learns that the first device is in the first mode, the second device infers that a current protocol version of the first device is incompatible with a current protocol version of the second device. The second device may send protocol information to the first device. The first device may update the protocol version based on the protocol information. The second device can push the protocol information to the first device when learning that the first device is in the first mode. This avoids a case in which the first device cannot update the protocol version because the first device cannot receive the protocol information, enables an updated protocol version of the first device to be compatible with the protocol version of the second device, avoids a problem that the protocol versions of the first device and the second device are incompatible with each other, improves user experience, and reduces an economic loss.

## Description

This application claims priority to Chinese Patent Application No. 202110449312.0, filed with the China National Intellectual Property Administration on April 25, 2021 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With development of communication technologies, protocol versions formulated by the 3rd generation partnership project (3rd generation partnership project, 3GPP) are continuously evolving. During protocol version evolution, usually, a new protocol version needs to be compatible with an old protocol version, or an old protocol version can be compatible with a new protocol version. However, in one case, in a process of promoting the new protocol version, the new protocol version is incompatible with the old protocol version or the old protocol version is incompatible with the new protocol version due to incomprehensive consideration of a person who promotes the new protocol version. In another case, a terminal device cannot parse a message sent by a network device based on a protocol version different from that of the terminal device. As a result, communication fails because the protocol versions of the terminal device and the network device are incompatible with each other. For example, the network device sends a message to the terminal device based on a new protocol version. Because the terminal device uses an old protocol version, the terminal device may not identify the message sent by the network device, and the terminal device discards the message. As a result, the terminal device cannot communicate with the network device, especially, when there are millions of terminal devices, all the millions of terminal devices cannot communicate with the network device, which causes poor user experience and a huge economic loss.

### SUMMARY

Embodiments of this application provide a communication method and a communication apparatus, to improve user experience and reduce an economic loss.

According to a first aspect, a communication method is provided. The communication method includes: A first device indicates, to a second device, that the first device is in a first mode, where a current protocol version of the first device is incompatible with a current protocol version of the second device. The first device receives protocol information from the second device, where the protocol information is used by the first device to update the current protocol version. The first device updates the current protocol version of the first device based on the protocol information.

In the foregoing solution, the first device may indicate, to the second device, that the first device is in the first mode. After the second device learns that the first device is in the first mode, the second device infers that the current protocol version of the first device is incompatible with the current protocol version of the second device. The second device may send protocol information to the first device. The first device may update the protocol version based on the protocol information. That is, the second device can push the protocol information to the first device when learning that the first device is in the first mode. This avoids a case in which the first device cannot update the protocol version because the first device cannot receive the protocol information, enables an updated protocol version of the first device to be compatible with the protocol version of the second device, that is, the updated protocol version of the first device to be compatible with the protocol version of the second device, avoids a problem that the protocol versions of the first device and the second device are incompatible with each other, improves user experience, and reduces an economic loss.

Optionally, the protocol information may indicate an upgrade package, a downgrade package, a protocol patch, a protocol stack installation package, an update package, or the like.

Optionally, the protocol version of the second device is a protocol version corresponding to the protocol information.

Optionally, the protocol version corresponding to the protocol information is a protocol version applicable to the first device, or the protocol version corresponding to the protocol information is compatible with the protocol version of the second device. For example, the protocol version corresponding to the protocol information may be the protocol version of the second device, or the protocol version corresponding to the protocol information may be a protocol whose version is earlier than or later than the protocol version of the second device, but normal communication between the first device and the second device can be ensured.

Optionally, the first device is a terminal device, and the second device is a network device. Optionally, the network device may be an access network device or a core network device. If the network device is a core network device, for example, the second device may be an access and mobility management function (access and mobility management function, AMF), a mobility management entity (mobility management entity, MME), or a network device that performs a similar function in a future protocol such as a 6G or 7G protocol.

Optionally, that the first device is in the first mode may be understood as that the first device is in the first mode and has a limited capability, but can complete update of the protocol version. That the first device is in the first mode may be understood as that, the first device is in the first mode and can ensure a most basic network connection, so that the first device completes update of the protocol version. That the first device is in the first mode may be understood as that, if the current protocol version of the first device is incompatible with the current protocol version of the second device, the first device enters the first mode and can escape in the first mode. Alternatively, that the first device is in the first mode may be understood as that, the first device in the first mode can update the current protocol version, and the first device in a non-first mode cannot update the current protocol version; and if the first device determines that the current protocol version of the first device is incompatible with the current protocol version of the second device, the first device enters the first mode and can complete update of the protocol version.

Optionally, the first mode may also be referred to as a first state.

Optionally, the first mode may be referred to as a security mode, a basic mode, a minimal mode, an upgrade mode, a protocol update mode, an escape mode, a manager mode, a fault tolerance mode, a protocol revision mode, a system revision mode, or the like. A name of the first mode is not limited in embodiments of this application.

In some possible implementations, that a first device indicates, to a second device, that the first device is in a first mode includes: The first device sends first indication information to the second device, where the first indication information indicates that the first device is in the first mode.

Optionally, the first device may carry the first indication information in any message sent to the second device.

Optionally, the first indication information may directly indicate that the first device is in the first mode or indirectly indicate that the first device is in the first mode.

In some possible implementations, that a first device indicates, to a second device, that the first device is in a first mode includes:
the first device sends current chip information of the first device to the second device; and/or
the first device sends current protocol version information of the first device to the second device, where the current version information of the first device indicates the current protocol version of the first device.

Optionally, the current chip information of the first device may indicate that the first device is in the first mode.

Optionally, the current chip information of the first device indicates current chip model information and/or chip vendor information of the first device.

Optionally, the current protocol version information of the first device indicates the current protocol version of the first device, and may further indicate that the first device is in the first mode.

Optionally, the current protocol version information of the first device may indicate the current protocol version of the first device by indicating a current protocol version number of the first device.

In some possible implementations, the communication method further includes: The first device starts a first timer at a first moment, and the first device no longer repeatedly enters the first mode before the first timer expires, where duration of the first timer is first duration, and the first moment is a moment at which the first device enters the first mode, or a moment at which the first device indicates, to the second device, that the first device is in the first mode.

In the foregoing solution, the first device may maintain the first timer, and the first device no longer repeatedly enters the first mode before the first timer expires. To be specific, after entering the first mode for the first time, the first device does not enter the first mode again before the first timer expires, to avoid signaling overheads due to the fact that the first device needs to repeatedly enter the first mode.

Optionally, the first device may enter the first mode after a condition for entering the first mode is met. Before the first timer expires, if the first device meets the condition for entering the first mode again, the first device does not enter the first mode again.

Optionally, the first duration may be specified in a protocol.

In some possible implementations, the communication method further includes: The first device starts a second timer at a second moment, and before the second timer expires, the first device no longer indicates, to the second device, that the first device is in the first mode, where duration of the second timer is second duration, and the second moment is a moment at which the first device enters the first mode, or a moment at which the first device indicates, to the second device, that the first device is in the first mode.

In the foregoing solution, the first device may maintain the second timer, and before the second timer expires, the first device no longer indicates, to the second device, that the first device is in the first mode. To be specific, after indicating, to the second device, that the first device is in the first mode, the first device does not indicate again, to the second device, that the first device is in the first mode. This can reduce signaling overheads.

Optionally, before the second timer expires, the first device does not send the first indication information to the second device again. Optionally, before the second timer expires, the first device does not send the current protocol information of the first device to the second device again, where the current protocol information of the first device indicates that the first device is in the first mode. Optionally, before the second timer expires, the first device does not send the current chip information of the first device to the second device again, where the current chip information of the first device indicates that the first device is in the first mode.

Optionally, the first device sends the first indication information to the second device, where the first indication information indicates that the first device is in the first mode. Before the second timer expires, the first device neither sends the first indication information to the second device nor sends the current version information of the first device and/or the current chip information of the first device. The current version information of the first device and/or the current chip information of the first device indicate/indicates that the first device is in the first mode. That is, the first device indicates, for the first time based on the first indication information, that the first device is in the first mode, and before the second timer expires, the first device does not indicate again, based on any one of the first indication information, the current version information of the first device, or the current chip information of the first device, that the first device is in the first mode. Similarly, the first device indicates, for the first time based on the current version information of the first device or the current chip information of the first device, that the first device is in the first mode, and before the second timer expires, the first device does not indicate again, based on the first indication information, the current version information of the first device, or the current chip information of the first device, that the first device is in the first mode.

Optionally, the second duration may be specified in a protocol.

In some possible implementations, the communication method further includes: The first device starts a third timer at a third moment, and the first device exits the first mode after the third timer expires, where duration of the third timer is third duration, and the third moment is a moment at which the first device enters the first mode, or a moment at which the first device indicates, to the second device, that the first device is in the first mode.

In the foregoing solution, the first device may maintain the third timer. After the third timer expires, the first device may exit the first mode, to avoid a case in which the first device cannot exit the first mode.

Optionally, the third duration may be specified in a protocol.

Optionally, the first device may maintain one, two, or three of the following: the first timer, the second timer, or the third timer. This is not limited in embodiments of this application.

In some possible implementations, the communication method further includes: The first device learns of, from the second device, a service that can be supported by the first device in the first mode.

Optionally, the first device may receive second indication information from the second device, where the second indication information indicates the service that can be supported by the first device in the first mode. Optionally, the second indication information may directly or indirectly indicate the service that can be supported by the first device in the first mode.

In some possible implementations, the first device is a terminal device, and the second device is a core network device; and that a first device indicates, to a second device, that the first device is in a first mode includes:
the terminal device sends a registration request message to the core network device, and indicates, based on the registration request message, that the terminal device is in the first mode.

In the foregoing solution, the terminal device may indicate, to the core network device based on the registration request message in a registration process, that the terminal device is in the first mode.

Optionally, the registration request message may carry the first indication information. Optionally, the registration request message may carry the current chip information of the terminal device, and the current chip information of the terminal device indicates that the terminal device is in the first mode. Optionally, the registration request message may carry the current version information of the terminal device, and the current version information of the terminal device indicates that the terminal device is in the first mode.

In some possible implementations, the first device is a terminal device, and the second device is a core network device; and that the first device receives protocol information from the second device includes:
the terminal device receives a registration accept message or a registration reject message from the core network device, where the registration accept message or the registration reject message includes the protocol information; or
the terminal device receives the protocol information from the core network device based on a data radio bearer DRB between the terminal device and an access network device.

In the foregoing solution, the core network device sends the registration accept message or the registration reject message to the terminal device, where the registration accept message or the registration reject message is used to carry the protocol information. Alternatively, the core network device may send the protocol information to the access network device, and the access network device may send the protocol information to the terminal device based on the DRB.

In some possible implementations, the first device is a terminal device, and the second device is an access network device; and that a first device indicates, to a second device, that the first device is in a first mode includes:
the terminal device sends an RRC message to the access network device through a radio resource control RRC connection, and indicates, based on the RRC message, that the terminal device is in the first mode.

That the first device receives protocol information from the second device includes:
the terminal device receives the protocol information from the access network device based on a DRB between the terminal device and the access network device.

In the foregoing solution, in an RRC connected state, the terminal device may indicate, to the access network device based on the RRC message, that the terminal device is in the first mode. The access network device may send the protocol information to the terminal device based on the DRB. In other words, the access network device may send the protocol information to the terminal device in a user plane procedure.

Optionally, the RRC message may carry the first indication information. Optionally, the RRC message may carry the current chip information of the terminal device, and the current chip information of the terminal device indicates that the terminal device is in the first mode. Optionally, the RRC message may carry the current version information of the terminal device, and the current version information of the terminal device indicates that the terminal device is in the first mode.

In some possible implementation, the first device is the terminal device, and the second device is the access network device.

That a first device indicates, to a second device, that the first device is in a first mode includes:
the terminal device sends an RRC setup request message to the access network device, and indicates, based on the RRC setup request message, that the first device is in the first mode.

That the first device receives protocol information from the second device includes:
the terminal device receives the protocol information from the access network device based on a DRB between the terminal device and the access network device.

In the foregoing solution, in an RRC non-connected state, the terminal device may indicate, to the access network device based on the RRC setup request message, that the terminal device is in the first mode. The access network device may send the protocol information to the terminal device based on a DRB. In other words, the access network device may send the protocol information to the terminal device in a user plane procedure.

Optionally, the RRC setup request message may carry the first indication information. Optionally, the RRC setup request message may carry the current chip information of the terminal device, and the current chip information of the terminal device indicates that the terminal device is in the first mode. Optionally, the RRC setup request message may carry the current version information of the terminal device, and the current version information of the terminal device indicates that the terminal device is in the first mode.

In some possible implementations, the communication method further includes: The terminal device sends a PDU session establishment request message to the core network device; the terminal device receives a PDU session establishment accept message from the core network device, where the PDU session establishment accept message includes a parameter for establishing a user plane connection; and the terminal device establishes the user plane connection based on the parameter for the user plane connection, where the user plane connection corresponds to the DRB.

In the foregoing solution, the terminal device may receive the PDU session accept message from the core network device in a PDU session establishment process, and establish the user plane connection based on the parameter that is used to establish the user plane connection and that is carried in the PDU session accept message.

In some possible implementation, the first device is a terminal device, and the second device is an access network device.

That a first device indicates, to a second device, that the first device is in a first mode includes:
the terminal device sends a radio resource control RRC setup request message to the access network device, and indicates, based on the RRC setup request message, that the terminal device is in the first mode.

That the first device receives protocol information from the second device includes:
the terminal device receives an RRC response message from the access network device, where the RRC response message includes the protocol information.

In the foregoing solution, in an RRC non-connected state, the terminal device may indicate, to the access network device based on the RRC setup request message, that the terminal device is in the first mode. The access network device may send the protocol information to the terminal device based on the RRC response message. In other words, the access network device may send the protocol information to the terminal device in a control plane procedure.

Optionally, the RRC setup request message may carry the first indication information. Optionally, the RRC setup request message may carry the current chip information of the terminal device, and the current chip information of the terminal device indicates that the terminal device is in the first mode. Optionally, the RRC setup request message may carry the current version information of the terminal device, and the current version information of the terminal device indicates that the terminal device is in the first mode.

Optionally, the RRC response message may be an RRC accept message or an RRC reject message. The RRC accept message indicates that the access network device accepts an RRC setup request of the terminal device, and the RRC reject message indicates that the access network device rejects the RRC setup request of the terminal device.

According to a second aspect, a communication method is provided, including: A second device learns that a first device is in a first mode, where a current protocol version of the second device is incompatible with a current protocol version of the first device; and the second device sends protocol information to the first device, where the protocol information is used by the first device to update the current protocol version.

In the foregoing solution, after the second device learns that the first device is in the first mode, the second device infers that the current protocol version of the first device is incompatible with the current protocol version of the second device. The second device may send the protocol information to the first device. The first device may update the protocol version based on the protocol information. That is, the second device can push the protocol information to the first device when learning that the first device is in the first mode. This avoids a case in which the first device cannot update the protocol version because the first device cannot receive the protocol information, enables an updated protocol version of the first device to be compatible with the protocol version of the second device, that is, the updated protocol version of the first device to be compatible with the protocol version of the second device, avoids a problem that the protocol versions of the first device and the second device are incompatible with each other, improves user experience, and reduces an economic loss.

Optionally, the second device may learn, from the first device, that the first device is in the first mode, or the second device may learn, from another device, that the first device is in the first mode. For example, the first device is a terminal device, and the second device is a core network device. The terminal device may indicate, to the core network device, that the terminal device is in the first mode, and the core network device learns, from the terminal device, that the terminal device is in the first mode. Alternatively, an access network device indicates, to the core network device, that the terminal device is in the first mode, and the core network device learns, from the access network device, that the terminal device is in the first mode.

Optionally, the protocol information may indicate an upgrade package, a downgrade package, a protocol patch, a protocol stack installation package, an update package, or the like.

Optionally, a protocol of the second device is a protocol corresponding to the protocol information.

Optionally, the protocol corresponding to the protocol information is a protocol applicable to the first device or the protocol corresponding to the protocol information is compatible with the protocol of the second device. For example, the protocol corresponding to the protocol information may be the protocol of the second device, or the protocol corresponding to the protocol information may be a protocol whose version is earlier than or later than the protocol version of the second device, but normal communication between the first device and the second device can be ensured.

Optionally, the first device is a terminal device, and the second device is a network device. Optionally, the second device may be an access network device or a core network device. If the second device is a core network device, for example, the second device may be an AMF, an MME, or a network device that performs a similar function in a future protocol such as a 6G or 7G protocol.

In some possible implementations, that a second device learns that a first device is in a first mode includes: The second device receives first indication information from the first device, where the first indication information indicates that the first device is in the first mode.

In some possible implementations, that a second device learns that a first device is in a first mode includes:
the second device receives current chip information of the first device from the first device; and/or
the second device receives current version information of the first device from the first device, where the current version information of the first device indicates the current protocol version of the first device.

In some possible implementations, the communication method further includes: The second device determines, based on the current protocol version of the second device, a protocol version required by the first device; and the second device obtains the protocol information based on the protocol version required by the first device.

In the foregoing solution, the second device may determine, based on the current protocol version of the second device, the protocol version required by the first device, and obtain the protocol information based on the protocol version required by the first device. In this way, the protocol information obtained by the second device is the protocol version required by the first device, and the protocol version required by the first device is compatible with the current protocol version of the second device.

Optionally, that the second device determines, based on the current protocol version of the second device, a protocol version required by the first device includes: The second device determines that the protocol version required by the first device is a protocol version compatible with the current protocol version of the second device. For example, the second device determines that the protocol version required by the first device is the current protocol version of the second device, or a protocol version that is earlier than or later than the current protocol version of the second device, but can be compatible with the current protocol version of the second device.

Optionally, the protocol information may be stored by the second device or obtained from the third device.

In some possible implementations, if the second device receives the current version information of the first device from the first device, that the second device determines, based on the current protocol version of the second device, version information required by the first device includes:
if a protocol version indicated by the current version information of the first device is incompatible with the current protocol version of the second device, the second device determines the current protocol version of the second device as the protocol version required by the first device.

In some possible implementations, that the second device obtains the protocol information based on the protocol version required by the first device includes: The second device sends a request message to a third device, where the request message is used to request the protocol information from the third device; and the second device receives the protocol information from the third device.

Optionally, after determining the protocol version required by the first device, the second device may trigger the second device to send the request message to the third device.

Optionally, after the second device determines the protocol version required by the first device, the request message sent by the second device to the third device carries the protocol version required by the first device.

Optionally, the third device may be a server. If the second device receives the current chip information of the first device from the first device, the second device may determine the third device based on the current chip information of the first device.

Optionally, the third device may be a core network device that stores the protocol information.

In some possible implementations, the request message includes the protocol version required by the first device, and/or if the second device receives the current chip information of the first device from the first device, the request message includes the current chip information of the first device.

In some possible implementations, the communication method further includes: A fourth timer is started at a fourth moment, and before the fourth timer expires, the second device no longer sends the protocol information to the first device after learning again, from the first device, that the first device is in the first mode, where duration of the fourth timer is fourth duration, and the fourth moment is a moment at which the second device determines that the first device is in the first mode.

In the foregoing solution, after learning again, from the first device, that the first device is in the first mode, the second device no longer sends the protocol information to the first device. In this way, the second device can be prevented from sending the protocol information to the first device for a plurality of times. This can reduce overheads, and can avoid a denial of service (denial of service, DoS) attack. Even if an attacker indicates, by using the first device to the second device, that the first device is in the first mode, the second device no longer sends the protocol information to the first device.

Optionally, the fourth moment is a moment at which the second device learns that the first device is in the first mode. Optionally, if the second device is a core network device, and the first device is a terminal device, the fourth moment is a moment at which the core network device learns, from the terminal device, that the terminal device is in the first mode. Optionally, if the second device is a core network device, and the first device is a terminal device, the fourth moment is a moment at which the core network device learns, from the access network device, that the terminal device is in the first mode.

In some possible implementations, the communication method further includes: The second device indicates, to the first device, a service that can be supported by the first device in the first mode.

In some possible implementations, the first device is a terminal device, and the second device is a core network device; and that a second device learns that a first device is in a first mode includes:
the core network device receives a registration request message from the terminal device, and indicates, based on the registration request message, that the terminal device is in the first mode.

In some possible implementations, the first device is a terminal device, and the second device is a core network device; and that the second device sends protocol information to the first device includes:
the core network device sends a registration accept message or a registration reject message to the terminal device, where the registration accept message or the registration reject message includes the protocol information; or
the core network device sends the protocol information to the terminal device based on a data radio bearer DRB between an access network device and the terminal device.

In some possible implementation, the first device is a terminal device, and the second device is an access network device.

That a second device learns that a first device is in a first mode includes:
the access network device receives an RRC message from the terminal device through a radio resource control RRC connection, and indicates, based on the RRC message, that the terminal device is in the first mode.

That the second device sends protocol information to the first device includes:
the access network device sends the protocol information to the terminal device based on a DRB between the access network device and the terminal device.

In some possible implementation, the first device is a terminal device, and the second device is an access network device.

That a second device learns that a first device is in a first mode includes:
the access network device receives an RRC setup request message from the terminal device, and indicates, based on the RRC setup request message, that the terminal device is in the first mode.

That the second device sends protocol information to the first device includes:
the access network device sends the protocol information to the terminal device based on a DRB between the access network device and the terminal device.

In some possible implementations, the communication method further includes:
the second device receives a PDU session establishment request message from the terminal device; and
the second device sends a PDU session establishment accept message to the terminal device, where the PDU session establishment accept message includes a parameter for establishing a user plane connection, and the user plane connection corresponds to the DRB.

In some possible implementations, the communication method further includes:
the second device generates a parameter for establishing a user plane connection; and
the second device sends, to the terminal device, the parameter for establishing the user plane connection, where the user plane connection corresponds to the DRB.

In some possible implementation, the first device is a terminal device, and the second device is an access network device.

That a second device learns that a first device is in a first mode includes:
the access network device receives an RRC setup request message from the terminal device, and indicates, based on the RRC setup request message, that the terminal device is in the first mode.

That the second device sends protocol information to the first device includes:
the access network device sends an RRC response message to the terminal device, where the RRC response message includes the protocol information.

It should be noted that, for beneficial effect in other possible implementations of the second aspect, refer to descriptions of the first aspect. To avoid repetition, details are not described again.

According to a third aspect, a communication apparatus is provided. The apparatus is configured to perform the method in any possible implementation of the foregoing aspects. Specifically, the apparatus includes a unit configured to perform the method in any one of the first aspect or the possible implementations of the first aspect, or a unit configured to perform the method in any one of the second aspect or the possible implementations of the second aspect.

According to a fourth aspect, a communication apparatus is provided, including a processor. The processor is coupled to a memory, and may be configured to execute instructions in the memory, to implement the method in any one of the first aspect or the possible implementations of the first aspect, or the method in any one of the second aspect or the possible implementations of the second aspect.

In a possible implementation, the communication apparatus further includes a memory. In a possible implementation, the communication apparatus further includes a communication interface, and the processor is coupled to the communication interface.

In an implementation, the communication apparatus is a first device. When the communication apparatus is the first device, the communication interface may be a transceiver or an input/output interface.

In another implementation, the communication apparatus is a chip disposed in a first device. When the communication apparatus is the chip disposed in the first device, the communication interface may be an input/output interface.

In an implementation, the communication apparatus is a second device. When the communication apparatus is the second device, the communication interface may be a transceiver or an input/output interface.

In another implementation, the communication apparatus is a chip disposed in a second device. When the communication apparatus is the chip disposed in the second device, the communication interface may be an input/output interface.

According to a fifth aspect, a processor is provided. The processor includes an input circuit, an output circuit, and a processing circuit. The processing circuit is configured to: receive a signal through the input circuit, and transmit a signal through the output circuit, to enable the processor to perform the method in any one of the first aspect or the possible implementations of the first aspect, or the method in any one of the second aspect or the possible implementations of the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a sixth aspect, a computer program product is provided. The computer program product includes a computer program (which may also be referred to as code or instructions). When the computer program is run, a computer is enabled to perform the method in any one of the first aspect or the possible implementations of the first aspect, or the method in any one of the second aspect or the possible implementations of the second aspect.

According to a seventh aspect, a computer-readable storage medium is provided. The computer-readable storage medium stores a computer program (which may also be referred to as code or instructions). When the computer program is run on a computer, the computer is enabled to perform the method in any one of the first aspect or the possible implementations of the first aspect, or the method in any one of the second aspect or the possible implementations of the second aspect.

### BRIEF DESCRIPTION OF DRAWINGS

FIG. 1 is a schematic diagram of a system architecture according to an embodiment of this application;
FIG. 2 to FIG. 13 each are a schematic diagram of a communication method according to an embodiment of this application; and
FIG. 14 and FIG. 15 each are a schematic block diagram of a communication apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

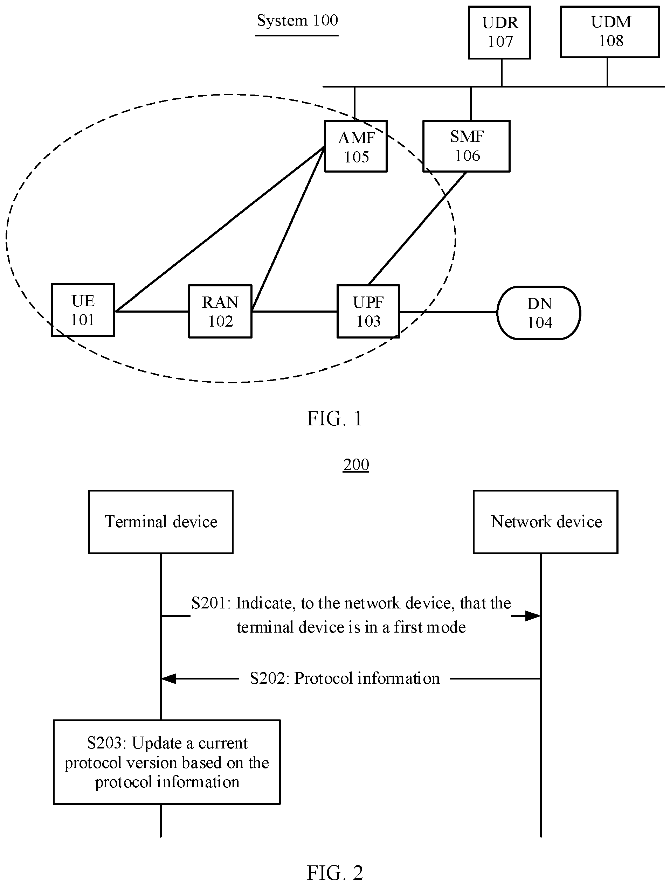

FIG. 1 is a schematic diagram of a system architecture used in an embodiment of this application. As shown in FIG. 1, the system 100 includes at least one of a user equipment (user equipment, UE) 101, a radio access network (radio access network, RAN) 102, a user plane function (user plane function, UPF) network element 103, a data network (data network, DN) 104, a core network access and mobility management function (core access and mobility management function, AMF) 105, a session management function (session management function, SMF) network element 106, a unified data repository (unified data repository, UDR) 107, or a unified data management (unified data management, UDM) 108.

The UE 101 may also be referred to as a terminal device, a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The UE 101 may be a device that provides voice/data connectivity for a user, for example, a handheld device or a vehicle-mounted device that has a wireless connection function. Currently, examples of some terminal devices include a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in the 5G network, a terminal device in the future evolved public land mobile network (public land mobile network, PLMN), or the like. This is not limited in this application.

The RAN 102 may be a device that communicates with the UE 101. The RAN 102 may also be referred to as an access network device or a radio access network device. The RAN 102 may be a transmission reception point (transmission reception point, TRP), may be an evolved NodeB (evolved NodeB, eNB or eNodeB) in an LTE system, may be a home NodeB (for example, a home evolved NodeB or a home NodeB, HNB) or a base band unit (base band unit, BBU), or may be a radio controller in a cloud radio access network (cloud radio access network, CRAN) scenario. Alternatively, the RAN 102 may be a relay station, an access point, a vehicle-mounted device, a wearable device, a network device in a 5G network, a network device in a future evolved PLMN network, or the like, may be an access point (access point, AP) in a WLAN, or may be a gNB in an NR system. Alternatively, the RAN 111 may be a metro base station, a micro base station, a picocell base station, a femto base station, or the like. This is not limited in this application.

In a network structure, the RAN 102 may include a central unit (centralized unit, CU) node, a distributed unit (distributed unit, DU) node, a radio access network (radio access network, RAN) device including the CU node and the DU node, or a device including a control plane CU node (CU-CP node), a user plane CU node (CU-UP node), and the DU node.

The RAN 102 provides a service for a cell. The UE 101 communicates with the cell by using a transmission resource (for example, a frequency domain resource or a spectrum resource) allocated by the RAN 102. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

The UPF 103 is mainly responsible for processing service data, for example, forwarding, charging, and lawful interception.

The DN 104 provides a data transmission service for the UE 101, and may be a public data network (public data network, PDN) network, for example, the internet (internet).

The AMF 105 is mainly used for attachment, mobility management, and a tracking area update procedure of the UE 101 in a mobile network. The access management network element terminates a non-access stratum (non-access stratum, NAS) message, completes registration management, connection management, reachability management, tracking area list (track area list, TA list) allocation, mobility management, and the like, and transparently routes a session management (session management, SM) message to the session management network element.

The SMF 106 is responsible for UPF selection or reselection, IP address allocation, session establishment, modification, and release, and quality of service (quality of service, QoS) control.

The UDR 107 is responsible for storing structured data information, where the data information includes subscription information, policy information, and network data or service data defined in a standard format, for example, an upgrade package.

The UDM 108 is responsible for managing subscription information of the UE 101.

It should be noted that names of the network elements (such as the UE 101, the RAN 102, the UPF 103, the DN 104, the AMF 105, the SMF 106, the UDR 107, and the UDM 108) included in FIG. 1 are merely names, and the names do not constitute a limitation on functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It should also be noted that, in FIG. 1, other network elements than the UE 101 may be referred to as a network device. In other words, the network device may include one or more network elements other than the UE 101 in FIG. 1.

When the UE 101 in FIG. 1 communicates with the network device (for example, the RAN 102 or the AMF 105), both the UE 101 and the network device need to complete communication based on a 3GPP protocol version. When the UE 101 communicates with the network device, a same protocol version usually needs to be used, for example, a protocol version R17 or R18. Even if protocol versions used by the UE 101 and the network device are different, the different protocol versions need to be compatible to ensure normal communication. For example, if the network device uses a protocol version R18, and the terminal device uses a protocol version R16, when the network device communicates with the UE 101, the protocol version R18 needs to be compatible with the protocol version R16 to ensure normal communication between the UE 101 and the network device. However, in some cases, different protocol versions are incompatible with each other. For example, a person who promotes a new protocol version does not fully consider the new protocol version. As a result, the new protocol version is incompatible with an old protocol version, or the old protocol version is incompatible with the new protocol version. Alternatively, the UE 101 cannot parse a message sent by the network device based on a protocol version different from that of the UE 101. As a result, the UE 101 cannot communicate with the network device. For example, the network device sends a message to the UE 101 based on a new protocol version. Because the UE 101 uses an old protocol version, the UE 101 may not identify the message sent by the network device, and the UE 101 discards the message. As a result, the UE 101 cannot communicate with the network device, especially, when there are millions of UEs 101, all the millions of UEs 101 cannot communicate with the network device, which causes poor user experience and a huge economic loss. Normally, the UE 101 needs to register with the network device, the UE 101 sends a registration request message to the network device based on a current protocol version of the UE 101, and the network device sends a registration accept message to the UE 101 based on a current protocol version of the network device, to complete a registration process. For example, an operator upgrades a protocol version of a network device of the operator to a new protocol version, but the UE 101 still uses the old protocol version. The UE 101 sends a registration request message to the network device, and the network device replies a registration accept message to the UE 101 based on the new protocol version. A field in the registration accept message is added by one byte (from 3 bytes before the upgrade to 4 bytes after the upgrade) in comparison with a field before the upgrade. After receiving the registration accept message, the UE 101 determines that a length of the field is greater than an expected length, and therefore determines that an error exists in the registration accept message, and then directly discards the registration accept message, resulting in a registration failure of the UE 101. Because the UE 101 cannot be registered, the UE 101 cannot download an upgrade package on a network device side, and therefore cannot upgrade the protocol version.

For ease of description, the number of the network element is omitted below. For example, "UE" represents "UE 101", and "AMF" represents "AMF 105".

The following describes a communication method 200 provided in embodiments of this application by using an example in which a first device is a terminal device and a second device is a network device. The method 200 includes the following steps.

S201: A terminal device indicates, to a network device, that the terminal device is in a first mode, and the network device learns, from the terminal device, that the terminal device is in the first mode.

Optionally, if a current protocol version of the terminal device is incompatible with a current protocol version of the network device, the terminal device enters the first mode.

Optionally, that the current protocol version of the terminal device is incompatible with the current protocol version of the network device may be understood as follows: The terminal device cannot communicate with the current protocol version of the network device based on the current protocol version. Specifically, when the current protocol version of the terminal device is later than the current protocol version of the network device, the current protocol version of the terminal device may be incompatible with the current protocol version of the network device; or when the current protocol version of the terminal device is earlier than the current protocol version of the network device, the current protocol version of the terminal device may be incompatible with the current protocol version of the network device.

That the terminal device is in the first mode may be understood in at least one of the following manners.

Manner 1: In the first mode, the terminal device has a limited capability, but can update the protocol version.

Manner 2: When the current protocol version of the terminal device is incompatible with the current protocol version of the network device, the terminal device can escape in the first mode, in other words, the terminal device can register with the network device in the first mode.

Manner 3: When the terminal device is in the first mode, a most basic network connection canbe ensured, so that the terminal device completes update of the protocol version.

Manner 4: The terminal device in the first mode can update the current protocol version, and the terminal device in a non-first mode cannot update the current protocol version. If the terminal device determines that the current protocol version of the terminal device is incompatible with the current protocol version of the network device, the terminal device enters the first mode from the non-first mode, to complete update of the protocol version.

In S201, the terminal device may indicate, to the network device in different manners, that the terminal device is in the first mode, and the network device may learn, in different manners, that the terminal device is in the first mode. The following provides discussions based on different cases.

Case 1: If the network device does not receive, within a preset time period, any message or a specific message sent by the terminal device, the network device learns that the terminal device may be in the first mode. In other words, the terminal device may not send any message to the network device to indicate that the terminal device is in the first mode.

Case 2: The terminal device sends first indication information to the network device, where the first indication information may indicate that the terminal device is in the first mode, and the network device receives the first indication information from the terminal device, and learns, based on the first indication information, that the terminal device is in the first mode. Optionally, the first indication information may directly indicate that the terminal device is in the first mode or indirectly indicate that the terminal device is in the first mode.

Case 3: The terminal device sends current chip information of the terminal device to the network device, where the current chip information of the terminal device may indicate that the terminal device is in the first mode, and the network device learns, based on the current chip information of the terminal device, that the terminal device is in the first mode. In other words, the network device may learn, after receiving the current chip information of the terminal device, that the current protocol version of the terminal device is incompatible with the protocol version of the network device, and the network device needs to send protocol information to the terminal device, so that the terminal device updates the current protocol version. That is, that the terminal device sends the current chip information of the terminal device to the network device may indirectly indicate that the terminal device is in the first mode.

Optionally, if the terminal device sends the current chip information of the terminal device to the network device, the network device may learn that the terminal device is in the first mode. If the terminal device does not send the current chip information of the terminal device to the network device, the network device learns that the terminal device is not in the first mode.

Optionally, in the case 3, the current chip information of the terminal device may indicate current chip vendor information of the terminal device, current chip model information of the terminal device, and/or the like. That is, in the case 3, the current chip information of the terminal device may not only indicate that the terminal device is in the first mode, but also indicate current chip vendor information and/or current chip model information of the terminal device.

Optionally, the current chip information of the terminal device sent by the terminal device to the network device may not indicate that the terminal device is in the first mode, and the chip information may indicate information related to a current chip of the terminal device, for example, indicate current chip vendor information of the terminal device, and/or current chip model information of the terminal device.

Case 4: The terminal device sends current protocol version information of the terminal device to the network device, where the current protocol version information of the terminal device may indicate that the terminal device is in the first mode, and the network device learns, based on the current protocol version information of the terminal device, that the terminal device is in the first mode. In other words, the network device may learn, after receiving the current protocol version information of the terminal device, that the current protocol version of the terminal device is incompatible with the protocol version of the network device, and the network device needs to send protocol information to the terminal device, so that the terminal device updates the current protocol version. That is, the current protocol version information of the terminal device sent by the terminal device to the network device may indirectly indicate that the terminal device is in the first mode.

Optionally, if the terminal device sends the current protocol version information of the terminal device to the network device, the network device may learn that the terminal device is in the first mode. If the terminal device does not send the current protocol version information of the terminal device to the network device, the network device learns that the terminal device is not in the first mode.

Optionally, in the case 4, the current version information of the terminal device may indicate the current protocol version of the terminal device. For example, the current version information of the terminal device may be a current protocol version number of the terminal device. That is, in the case 4, the current protocol version information of the terminal device may not only indicate that the terminal device is in the first mode, but also indicate the current protocol version of the terminal device.

Optionally, the current protocol version information of the terminal device sent by the terminal device to the network device may not indicate that the terminal device is in the first mode, and the current protocol version information may indicate the current protocol version of the terminal device.

Case 5: The terminal device sends current chip information and current protocol version information of the terminal device to the network device, where the current chip information and the current protocol version information of the terminal device may indicate that the terminal device is in the first mode, and the network device learns, based on the current chip information and the current protocol version information of the terminal device, that the terminal device is in the first mode. In other words, the network device may learn, after receiving the current chip information and the current protocol version information of the terminal device, that the current protocol version of the terminal device is incompatible with the protocol version of the network device, and the network device needs to send protocol information to the terminal device, so that the terminal device updates the current protocol version. That is, the current protocol version information of the terminal device sent by the terminal device to the network device may indirectly indicate that the terminal device is in the first mode.

Optionally, if the terminal device sends the current chip information and the current protocol version information of the terminal device to the network device, the network device may learn that the terminal device is in the first mode. If the terminal device does not send the current chip information and the current protocol version information of the terminal device to the network device, the network device learns that the terminal device is not in the first mode.

Optionally, in the case 5, the current version information of the terminal device may indicate the current protocol version of the terminal device. For example, the current version information of the terminal device may be a current protocol version number of the terminal device. The current chip information of the terminal device may indicate current chip vendor information of the terminal device, and/or current chip model information and the like of the terminal device. That is, in the case 5, the current protocol version information of the terminal device and the current chip information of the terminal device may further indicate that the terminal device is in the first mode.

Optionally, the current protocol version information and the current chip information of the terminal device that are sent by the terminal device to the network device may not indicate that the terminal device is in the first mode, and the current protocol version information may indicate the current protocol version of the terminal device. The current chip information may indicate the current chip vendor information of the terminal device and/or the current chip model information of the terminal device.

Optionally, if the network device is a core network device in the method 200, in an alternative manner of S201, an access network device indicates, to the core network device, that the terminal device is in the first mode, and the core network device learns, from the access network device, that the terminal device is in the first mode. Optionally, if the access network device determines that a protocol version is incompatible with the protocol version of the terminal device, the access network device indicates, to the terminal device, that the terminal device enters the first mode, and the access network device indicates, to the core network device, that the terminal device is in the first mode. For example, if the access network device incorrectly parses a message after receiving the message of the terminal device, the access network device determines that the protocol version of the access network device is incompatible with the protocol version of the terminal device. Alternatively, the access network device receives messages sent by the terminal device for a plurality of times, and when a quantity of times that the message is incorrectly parsed reaches a preset value, the access network device determines that the protocol version of the access network device is incompatible with the protocol version of the terminal device.

Optionally, before S201, the method 200 further includes: After the terminal device meets a trigger condition for entering the first mode, the terminal device enters the first mode. Optionally, the trigger condition is that the terminal device determines that the protocol version of the terminal device is incompatible with the protocol version of the network device.

The terminal device may determine, in at least one of the following manners, that the protocol version of the terminal device is incompatible with the protocol version of the network device.

Manner 1: If the terminal device incorrectly parses a system message after receiving the system message, the terminal device determines that the protocol version of the terminal device is incompatible with the protocol version of the network device. Alternatively, the terminal device receives system messages for a plurality of times, and when a quantity of times that the system message is incorrectly parsed reaches a preset value, the terminal device determines that the protocol version of the terminal device is incompatible with the protocol version of the network device.

Manner 2: If the terminal device fails to register with the network device, the terminal device determines that the protocol version of the terminal device is incompatible with the protocol version of the network device. Alternatively, if the terminal device registers with the network device for a plurality of times, and a quantity of registration failures reaches a preset value, the terminal device determines that the protocol version of the terminal device is incompatible with the protocol version of the network device.

Optionally, the terminal device may start a first timer at a first moment, where duration of the first timer is first duration, and the first duration is a preset value. Before the first timer expires, the terminal device no longer repeatedly enters the first mode. It may also be understood that the terminal device remains in the first mode before the first timer expires. In this way, this avoids a case in which the terminal device needs to repeatedly enter the first mode after the trigger condition for entering the first mode is met. This helps reduce signaling overheads, and further helps reduce energy consumption.

Optionally, before the first timer expires, the terminal device may perform S201.

The first moment is discussed below in two cases.

Case 1: The first moment is a moment at which the terminal device enters the first mode. In other words, the terminal device immediately starts the first timer after entering the first mode.

Case 2: The first moment is a moment at which the terminal device indicates, to the network device, that the terminal device is in the first mode in S201. For example, the first moment is a moment at which the terminal device sends the first indication information, the current protocol version information of the terminal device, or the current chip information of the terminal device (the first indication information, the current protocol version information of the terminal device, or the current chip information of the terminal device indicates that the terminal device is in the first mode) to the network device.

Optionally, the first duration in the foregoing two cases may be the same or different.

After entering the first mode, the terminal device needs to indicate, to the second device, that the terminal device is in the first mode. In other words, the first moment in the case 1 may be earlier than the first moment in the case 2, or the first moment in the case 1 is the same as the first moment in the case 2 (that is, the moment at which the terminal device enters the first mode also indicates, to the second device, that the terminal device is in the first mode). To be specific, start time of the first timer in the case 1 is earlier than or equal to start time in the case 2. If the first duration in the case 1 is the same as that in the case 2, timeout duration of the first timer in the case 1 is earlier than or equal to timeout duration in the case 2.

Optionally, the terminal device may start a second timer at a second moment, where duration of the second timer is second duration, and the second duration is a preset value. Before the second timer expires, the terminal device no longer indicates again, to the network device, that the terminal device is in the first mode. This avoids signaling overheads due to the fact that the terminal device needs to repeatedly indicate, to the network device, that the terminal device is in the first mode.

The second moment is discussed below in two cases.

Case 1: The second moment is a moment at which the terminal device enters the first mode. In other words, the terminal device immediately starts the second timer after entering the first mode. The terminal device starts the second timer at a moment at which the terminal device enters the first mode, and after the terminal device enters the first mode and before the second timer expires, the terminal device indicates, to the network device for the first time, that the terminal device is in the first mode, and does not indicate again, to the network device before the second timer expires, that the terminal device is in the first mode.

Case 2: The second moment is a moment at which the terminal device indicates, to the network device, that the terminal device is in the first mode in S201. In other words, the second moment is a moment at which the terminal device indicates, to the network device for the first time, that the terminal device is in the first mode. The terminal device starts the second timer at the moment at which the terminal device indicates, to the network device for the first time, that the terminal device is in the first mode, and the terminal device no longer indicates again, to the network device before the second timer expires, that the terminal device is in the first mode. For example, the second moment is a moment at which the terminal device sends the first indication information, the current protocol version information of the terminal device, or the current chip information of the terminal device (the first indication information, the current protocol version information of the terminal device, or the current chip information of the terminal device indicates that the terminal device is in the first mode) to the network device.

Optionally, the second duration in the foregoing two cases may be the same or different.

After entering the first mode, the terminal device needs to indicate, to the second device, that the terminal device is in the first mode. In other words, the second moment in the case 1 may be earlier than the second moment in the case 2, or the second moment in the case 1 is the same as the second moment in the case 2 (that is, the moment at which the terminal device enters the first mode also indicates, to the network device, that the terminal device is in the first mode). To be specific, start time of the second timer in the case 1 is earlier than or equal to start time in the case 2. If the second duration in the case 1 is the same as the second duration in the case 2, timeout duration of the second timer in the case 1 is earlier than or equal to timeout duration in the case 2.

Optionally, the terminal device may start a third timer at a third moment, where duration of the third timer is third duration, and the third duration is a preset value. After the third timer expires, the terminal device exits the first mode. This avoids a case in which the terminal device cannot exit the first mode once entering the first mode.

The third moment is discussed below in two cases.

Case 1: The third moment is a moment at which the terminal device enters the first mode. In other words, the terminal device immediately starts the third timer after entering the first mode. The terminal device starts the third timer at the moment at which the terminal device enters the first mode, and performs S201 after the terminal device enters the first mode and before the third timer expires.

Case 2: The third moment is a moment at which the terminal device indicates, to the network device, that the terminal device is in the first mode in S201. The terminal device starts the third timer at the moment at which the terminal device indicates, to the network device, that the terminal device is in the first mode. After the third timer expires, the terminal device exits the first mode. For example, the third moment is a moment at which the terminal device sends the first indication information, the current protocol version information of the terminal device, or the current chip information of the terminal device (the first indication information, the current protocol version information of the terminal device, or the current chip information of the terminal device indicates that the terminal device is in the first mode) to the network device.

Optionally, the third duration in the foregoing two cases may be the same or different.

After entering the first mode, the terminal device needs to indicate, to the second device, that the terminal device is in the first mode. In other words, the third moment in the case 1 may be earlier than the third moment in the case 2, or the third moment in the case 1 is the same as the third moment in the case 2 (that is, the moment at which the terminal device enters the first mode also indicates, to the network device, that the terminal device is in the first mode). To be specific, start time of the third timer in the case 1 is earlier than or equal to start time in the case 2. If the third duration in the case 1 is the same as the third duration in the case 2, timeout duration of the third timer in the case 1 is earlier than or equal to timeout duration in the case 2.

It may be understood that the terminal device may maintain one, two, or three of the following: the first timer, the second timer, and the third timer at the same time. This is not shown in embodiments of this application. In addition, at least two of the following may be the same or different: the first moment, the second moment, and the third moment. This is not limited in this application. In addition, at least two of the following may be the same or different: the first duration, the second duration, and the third duration. This is not limited in this application.

S202: The network device sends the protocol information to the terminal device, and the terminal device receives the protocol information from the network device, where the protocol information is used by the terminal device to update the current protocol version.

After learning that the terminal device is in the first mode, the network device may send the protocol information to the terminal device.

Optionally, the protocol information may indicate an upgrade package, a downgrade package, a protocol patch, a protocol stack installation package, an update package, or the like. To be specific, the terminal device may upgrade the protocol version based on the protocol information, may downgrade the protocol version based on the protocol information, patch the protocol version, or install the protocol version based on the protocol information, may update the protocol version based on the protocol information, or the like.

Optionally, before S202, the method 200 further includes: The network device determines a protocol version required by the terminal device. In this way, in S202, the network device may send, to the terminal device, protocol information corresponding to the protocol version required by the terminal device, and the network device may obtain the protocol version required by the terminal device in any one of the following manners:

Manner 1: The network device determines the current protocol version of the network device as the protocol version required by the terminal device. That is, as long as the network device learns that the terminal device is in the first mode, the network device may determine the current protocol version of the network device as the protocol version required by the terminal device. In other words, the network device may not pay attention to the current protocol version of the terminal device. As long as the network device learns that the terminal device is in the first mode and the network device also learns that the terminal device needs to update the protocol version, the network device determines the protocol version of the network device as the protocol version required by the terminal device.

Manner 2: If the terminal device sends the current chip information of the terminal device to the network device, the network device may determine, based on the current chip information of the terminal device, the protocol version required by the terminal device. For example, the network device may determine a protocol version that can adapt to the current chip information of the terminal device as the protocol version required by the terminal device. If there are a plurality of protocol versions that can adapt to the current chip information of the terminal device, the network device may select a later protocol version from the plurality of protocol versions to determine the protocol version required by the terminal device, or the network device may select a protocol version that is close to the protocol version of the network device from the plurality of protocol versions, or determine the protocol version of the network device as the protocol version required by the terminal device.

Manner 3: If the terminal device sends the current version information of the terminal device to the network device, and a protocol version indicated by the current version information of the terminal device is different from the current protocol version of the network device, the network device determines the current protocol version of the network device as the protocol version required by the terminal device.

Manner 4: If the terminal device sends the current version information of the terminal device to the network device, and a protocol version indicated by the current version information of the terminal device is different from the current protocol version of the network device, the network device determines a protocol version compatible with the protocol version of the terminal device as the protocol version required by the terminal device, where the protocol version compatible with the protocol version of the terminal device may be the protocol version of the network device, or may be a protocol version earlier than the protocol version of the network device, or a protocol version later than the protocol version of the network device.

Manner 5: If the terminal device sends the current version information and the current chip information of the terminal device to the network device, the network device may determine, with reference to the current version information and the current chip information of the terminal device, and the protocol version of the network device, the protocol version required by the terminal device. Specifically, if the protocol version indicated by the current version information of the terminal device is different from the current protocol version of the network device, and the current protocol version of the network device can adapt to the current chip information of the terminal device, the network device determines the current protocol version of the network device as the protocol version required by the terminal device.

Optionally, after the network device determines the protocol version required by the terminal device, the network device may obtain the protocol information based on the protocol version required by the terminal device. The network device may obtain the protocol information in any one of the following manners.

Manner 1: The network device stores protocol information required by the terminal device.

Specifically, the network device may store one or more pieces of protocol information. After the network device learns that the terminal device is in the first mode, the network device determines, based on the protocol version required by the terminal device, the protocol information required by the terminal device. For example, the network device determines that the protocol version required by the terminal device is R17, and the network device sends a stored R17 installation package, upgrade package, or protocol patch to the terminal device. In this case, the protocol information indicates the R17 installation package, upgrade package, or protocol patch.

Manner 2: The network device obtains the protocol information from a server.

Optionally, the network device sends a request message to the server, where the request message is used to request the protocol information from the server, and the network device receives the protocol information from the server.

Optionally, the request message may include the protocol version required by the terminal device, and the server may determine the protocol information based on the protocol version required by the terminal device, and send the protocol information to the network device.

Optionally, the request message may include the version information required by the terminal device, and the version information required by the terminal device indicates the protocol version required by the terminal device. The server determines the protocol information based on the protocol version that is required by the terminal device and that is indicated by the version information required by the terminal device, and sends the protocol information to the network device.

Optionally, the network device may determine the server based on the terminal device. For example, the terminal device is provided by a vendor, and the network device may learn of the server corresponding to a chip of the terminal device, and send the request message to the server.

Optionally, if the network device receives the chip information from the terminal device, the chip information indicates chip vendor information and/or chip model information. The network device may determine the server based on the chip vendor information and/or the chip model information, and send the request message to the server, where the request message includes the chip information of the terminal device.

Optionally, if the network device receives the chip information from the terminal device, the chip information indicates chip vendor information and/or chip model information. The network device may determine the server based on the chip vendor information and/or the chip model information, and send the request message to the server, where the request message includes the chip information of the terminal device and the protocol version required by the terminal device. The server determines the protocol information based on the chip information of the terminal device and the protocol version required by the terminal device, and sends the protocol information to the network device.

Manner 3: The network device in the method 200 obtains the protocol information from another network device.

For example, if the network device in the method 200 is an AMF, in the manner 3, the AMF may obtain the protocol information from a UDR. In this case, the UDR is the another network device. Alternatively, the AMF may obtain the protocol information from a UDM. In this case, the UDM is the another network device.

Optionally, the network device in the method 200 sends a request message to the another network device, where the request message is used to request the protocol information from the another network device, and the network device in the method 200 receives the protocol information from the another network device.

Optionally, the request message may include the protocol version required by the terminal device, and the another network device may determine the protocol information based on the protocol version required by the terminal device, and send the protocol information to the network device in the method 200.

Optionally, the request message may include the version information required by the terminal device, and the version information required by the terminal device indicates the protocol version required by the terminal device. The another network device determines the protocol information based on the protocol version that is required by the terminal device and that is indicated by the version information required by the terminal device, and sends the protocol information to the network device in the method 200.

Optionally, if the network device in the method 200 receives the chip information from the terminal device, the chip information indicates chip vendor information and/or chip model information. The network device in the method 200 may send the request message to the another network device, where the request message includes the chip information of the terminal device and the protocol version required by the terminal device. The another network device determines the protocol information based on the chip information of the terminal device and the protocol version required by the terminal device, and sends the protocol information to the network device in the method 200.

It may be understood that the terminal device in the method 200 may be a first device, the network device in the method 200 may be a second device, the server in the manner 2 may be a third device, and the another network device in the manner 3 may also be a third device.

Optionally, after S201, the network device determines that the terminal device is in the first mode, and the network device may start a fourth timer at a fourth moment, where duration of the fourth timer is fourth duration. Before the fourth timer expires, the network device does not send the protocol information to the terminal device again even if the network device learns again, from the terminal device, that the terminal device is in the first mode. For example, even if the network device receives the first indication information from the terminal device again, receives the current version information of the terminal device again, or receives the current chip information of the terminal device again (the first indication information, the current version information of the terminal device, or the current chip information of the terminal device indicates that the terminal device is in the first mode), the network device does not send the protocol information to the terminal device again. In this way, the network device can be prevented from sending the protocol information to the terminal device for a plurality of times. This can reduce overheads, and can avoid a denial of service (denial of service, DoS) attack. Even if an attacker indicates, to the network device by using the terminal device, that the terminal device is in the first mode, the network device no longer sends the protocol information to the terminal device.

The fourth moment at which the network device starts the fourth timer may be a moment at which the network device determines that the terminal device is in the first mode. Optionally, after S201, the network device determines that the terminal device is in the first mode, or the network device in the method 200 may determine, based on information that is sent by the another network device and that indicates that the terminal device is in the first mode, that the terminal device is in the first mode. For example, the network device in the method 200 is the AMF in FIG. 1, and the AMF may determine, based on information that is sent by the RAN and that indicates that the terminal device is in the first mode, that the terminal device is in the first mode.

Optionally, the fourth timer may be irrelevant to the foregoing first timer, second timer, or third timer. Optionally, the fourth timer may be related to the foregoing first timer, second timer, or point timer. For example, the fourth duration of the fourth timer may be greater than or equal to the first duration, or the fourth duration may be greater than or equal to the second duration, or the fourth duration may be greater than or equal to the third duration. This is not limited in this embodiment of this application.

In different scenarios, S201 and S202 may be implemented based on different messages. The following separately describes the scenarios.

### Scenario 1: a registration scenario

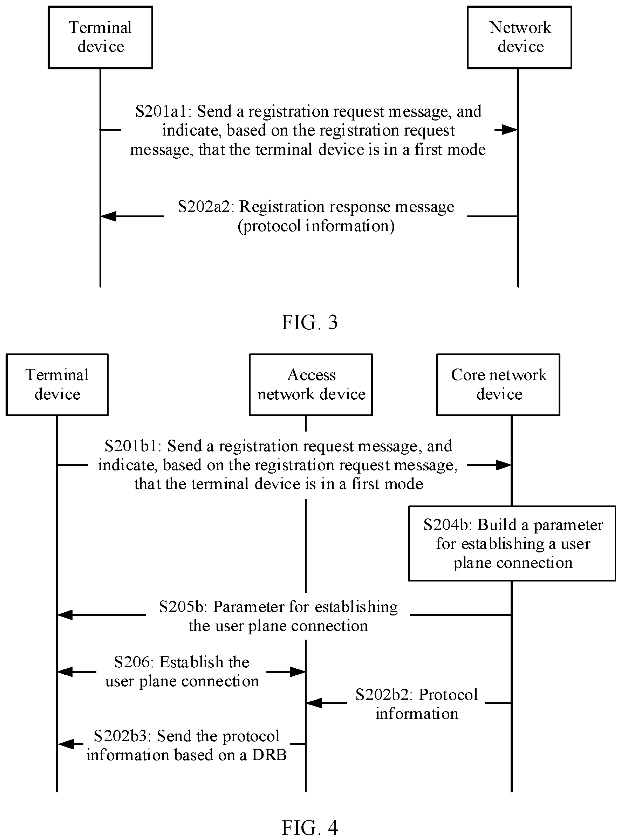

In this registration scenario, as shown in FIG. 3, S201 includes S201a1: The terminal device sends a registration request message to the network device, and indicates, based on the registration request message, that the terminal device is in the first mode, and the network device learns, based on the registration request message, that the terminal device is in the first mode. For example, the registration request message may carry the first indication information, and the first indication information indicates that the terminal device is in the first mode. For another example, the registration request message may carry the current version information of the terminal device, and the current version information of the terminal device indicates that the terminal device is in the first mode. For another example, the registration request message may carry the current version information of the terminal device, and the current version information of the terminal device indicates that the terminal device is in the first mode. In the registration scenario, S202 may include S202a2: The network device sends a registration response message to the terminal device. The registration response message includes the protocol information. The registration response message may be a registration accept message, and the registration accept message indicates that the network device accepts registration of the terminal device. Alternatively, the registration response message may be a registration reject message, and the registration reject message indicates that the network device rejects registration of the terminal device.

That is, in the scenario 1, S202a2 is to send the protocol information to the terminal device in a control plane procedure.

For example, in the scenario 1, the network device may be the core network device. In other words, the terminal device registers with the core network device. For example, the core network device may be the AMF shown in FIG. 1.

Scenario 2: S201 is implemented in the registration scenario, and S202 is implemented in the user plane procedure. In the scenario 2, the network device is the core network device.

In this registration scenario, as shown in FIG. 4, S201 includes S201b1: The terminal device sends a registration request message to the core network device, and indicates, based on the registration request message, that the terminal device is in the first mode. The core network device learns, based on the registration request message, that the terminal device is in the first mode. For example, the registration request message may carry the first indication information, and the first indication information indicates that the terminal device is in the first mode. For another example, the registration request message may carry the current version information of the terminal device, and the current version information of the terminal device indicates that the terminal device is in the first mode. For another example, the registration request message may carry the current version information of the terminal device, and the current version information of the terminal device indicates that the terminal device is in the first mode. S202 may include S202b2 and S202b3. In S202b2, the core network device sends the protocol information to the access network device. In S202b3, the access network device may send the protocol information to the terminal device based on a data radio bearer (data radio bearer, DRB) between the access network device and the terminal device, and the terminal device receives the protocol information based on the DRB between the access network device and the terminal device.

Optionally, in the scenario 2, the terminal device may be preset with a parameter for establishing a user plane connection, and may establish the user plane connection to the access network device based on the preset parameter for establishing the user plane connection, where the user plane connection corresponds to the DRB.

Optionally, in the scenario 2, the method 200 may further include S204b: The core network device may build a parameter for establishing a user plane connection. Before S202b3, the method 200 may further include S205b: The access network device sends, to the terminal device, the built parameter for establishing the user plane connection. S206: The terminal device may establish the user plane connection to the access network device based on the parameter for establishing the user plane connection, where the user plane connection corresponds to the DRB.

Optionally, the method 200 may further include: The access network device may build a parameter for establishing a user plane connection, and send, to the terminal device, the built parameter for establishing the user plane connection. The terminal device may establish the user plane connection to the access network device based on the parameter for establishing the user plane connection, where the user plane connection corresponds to the DRB.

Optionally, the parameter that is built by the core network device or the access network device and that is used to establish the user plane connection may be a parameter for establishing a "false" PDU session. The "false" PDU session herein means that compared with a user plane connection of a common PDU session, a user plane connection of the "false" PDU session includes only a user plane connection from the terminal device to the access network device, and does not include a user plane connection from the access network device to the core network device. The user plane connection of the common PDU session includes a user plane connection from the terminal device to the access network device and a user plane connection from the access network device to the core network device (for example, the core network device is a UPF). However, the terminal device does not perceive whether a PDU session is a common PDU session or a "false" PDU session. Therefore, the terminal device may not perceive that the user plane connection is established for the "false" PDU session, and the terminal device establishes the user plane connection to the access network device only based on the received parameter for establishing the user plane connection.

Optionally, in the scenario 2, the method 200 may further include: The terminal device sends a PDU session establishment request message to the core network device, where the PDU session establishment request message is used to request the core network device to establish a PDU session. The core network device may send a PDU session accept message to the terminal device, where the PDU session accept message includes the parameter for establishing the user plane connection in S205b. The terminal device may establish the user plane connection to the access network device based on the parameter for establishing the user plane connection, where the user plane connection corresponds to the DRB. That is, the parameter that is included in the PDU session accept message and that is used to establish the user plane connection is a parameter for establishing the user plane connection of the common PDU session. In other words, the user plane connection of the common PDU session includes the user plane connection from the terminal device to the access network device and the user plane connection from the access network device to the core network device (for example, the core network device is the UPF).

For example, in the scenario 2, the core network device is the AMF shown in FIG. 1, and the access network device is the RAN shown in FIG. 1.

Optionally, in the scenario 1 and the scenario 2, after receiving the registration request message sent by the terminal device, the core network learns that the terminal device is in the first mode, and the core network device can simplify a registration procedure of the terminal device. This can improve a registration speed and a registration success rate of the terminal device. For example, the core network device may not perform authentication on the terminal device, may not perform mobility restriction (mobility restriction) detection on the terminal device, or may not perform access restriction (access restriction) detection on the terminal device.

Scenario 3: S201 is implemented based on a radio resource control (radio resource control, RRC) message, and S202 is implemented in a user plane procedure. In the scenario 3, the network device may be the access network device.

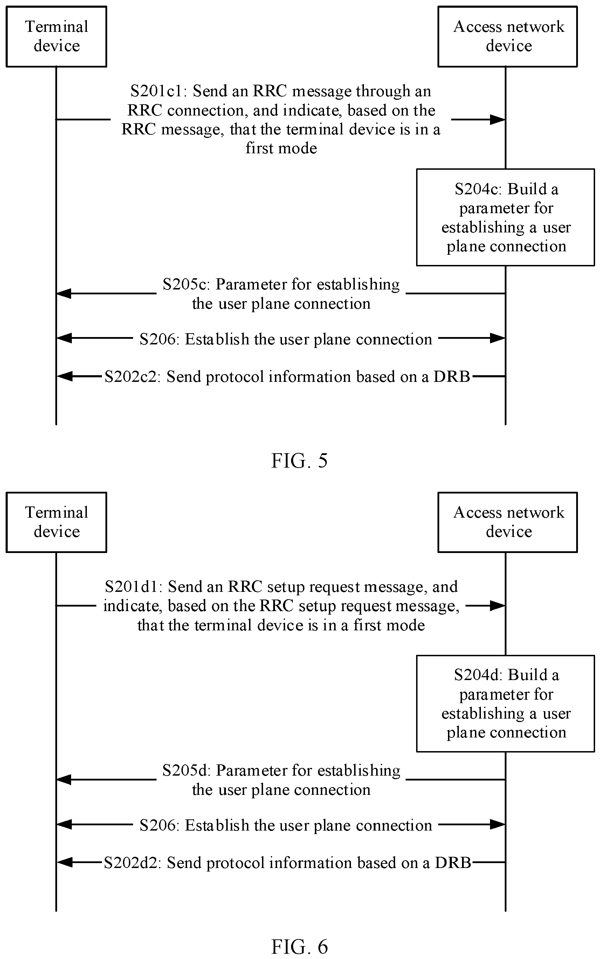

In the scenario 3, RRC between the terminal device and the access network device is in a connected state. As shown in FIG. 5, S201 includes S201c1: The terminal device sends the RRC message to the access network device through an RRC connection, where the RRC message indicates that the terminal device is in the first mode. The access network device learns, based on the RRC message, that the terminal device is in the first mode. For example, the RRC message may carry the first indication information, and the first indication information indicates that the terminal device is in the first mode. For another example, the RRC message may carry the current version information of the terminal device, and the current version information of the terminal device indicates that the terminal device is in the first mode. For another example, the RRC message may carry the current version information of the terminal device, and the current version information of the terminal device indicates that the terminal device is in the first mode. S202 may include S202c2: The access network device sends the protocol information to the terminal device based on a DRB between the access network device and the terminal device, and the terminal device receives the protocol information based on the DRB between the access network device and the terminal device.

Optionally, in the scenario 3, the terminal device may be preset with a parameter for establishing a user plane connection, and may establish the user plane connection to the access network device based on the preset parameter for establishing the user plane connection, where the user plane connection corresponds to the DRB.

Optionally, in the scenario 3, the method 200 may further include S204c: The access network device may build a parameter for establishing a user plane connection. Before S202c2, the method 200 may further include S205c: The access network device sends to the terminal device, the built parameter for establishing the user plane connection. S206: The terminal device may establish the user plane connection to the access network device based on the parameter for establishing the user plane connection, where the user plane connection corresponds to the DRB. Optionally, the access network device may send, to the terminal device based on the RRC message, the parameter for establishing the user plane connection.

Optionally, the parameter that is built by the access network device and that is used to establish the user plane connection may be a parameter for establishing a "false" PDU session. The "false" PDU session herein means that compared with a user plane connection of a common PDU session, a user plane connection of the "false" PDU session includes only a user plane connection from the terminal device to the access network device, and does not include a user plane connection from the access network device to the core network device. The user plane connection of the common PDU session includes a user plane connection from the terminal device to the access network device and a user plane connection from the access network device to the core network device (for example, the core network device is a UPF). However, the terminal device does not perceive whether a PDU session is a common PDU session or a "false" PDU session. Therefore, the terminal device may not perceive that the user plane connection is established for the "false" PDU session, and the terminal device establishes the user plane connection to the access network device only based on the received parameter for establishing the user plane connection.

For example, in the scenario 3, the access network device is the RAN shown in FIG. 1.

Scenario 4: S201 is implemented based on an RRC setup request message, and S202 is implemented in a user plane procedure. In the scenario 4, the network device may be the access network device.

In the scenario 4, RRC between the terminal device and the access network device is in a non-connected state. As shown in FIG. 6, S201 includes S201d1: The terminal device sends an RRC setup request (RRC setup Request) message to the access network device, where the RRC setup request message is used to request to establish an RRC connection to the access network device, and the terminal device indicates, based on the RRC setup request message, that the terminal device is in the first mode. The access network device learns, based on the RRC setup request message, that the terminal device is in the first mode. For example, the RRC setup request message may carry the first indication information, and the first indication information indicates that the terminal device is in the first mode. For another example, the RRC setup request message may carry the current version information of the terminal device, and the current version information of the terminal device indicates that the terminal device is in the first mode. For another example, the RRC setup request message may carry the current version information of the terminal device, and the current version information of the terminal device indicates that the terminal device is in the first mode. S202 may include S202d2: The access network device sends the protocol information to the terminal device based on a DRB between the access network device and the terminal device, and the terminal device receives the protocol information based on the DRB between the access network device and the terminal device.

Optionally, in the scenario 4, the method 200 may further include S204d: The access network device may build a parameter for establishing a user plane connection. Before S202d2, the method 200 may further include S205d: The access network device sends, to the terminal device, the built parameter for establishing the user plane connection. S206: The terminal device may establish the user plane connection to the access network device based on the parameter for establishing the user plane connection, where the user plane connection corresponds to the DRB. Optionally, after the access network device receives the RRC setup request message, the access network device may send, to the terminal device based on an RRC setup (RRC setup) message, the parameter for establishing the user plane connection.

Optionally, the parameter that is built by the access network device and that is used to establish the user plane connection may be a parameter for establishing a "false" PDU session. The "false" PDU session herein means that compared with a user plane connection of a common PDU session, a user plane connection of the "false" PDU session includes only a user plane connection from the terminal device to the access network device, and does not include a user plane connection from the access network device to the core network device. The user plane connection of the common PDU session includes a user plane connection from the terminal device to the access network device and a user plane connection from the access network device to the core network device (for example, the core network device is a UPF). However, the terminal device does not perceive whether a PDU session is a common PDU session or a "false" PDU session. Therefore, the terminal device may not perceive that the user plane connection is established for the "false" PDU session, and the terminal device establishes the user plane connection to the access network device only based on the received parameter for establishing the user plane connection.

For example, in the scenario 4, the access network device is the RAN shown in FIG. 1.

Scenario 5: S201 is implemented based on an RRC setup request message, and S202 is implemented based on an RRC response. In the scenario 5, the network device may be the access network device.

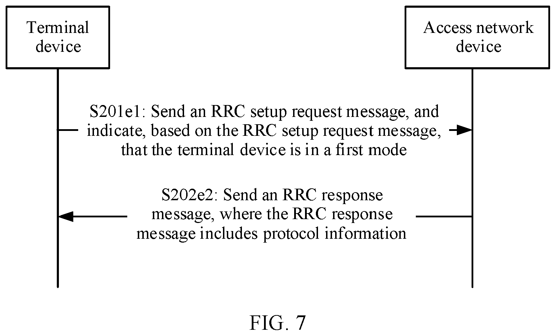

In the scenario 5, RRC between the terminal device and the access network device is in a non-connected state. As shown in FIG. 7, S201 includes S201e1: The terminal device sends an RRC setup request (RRC setup request) message to the access network device, where the RRC setup request message is used to request to establish an RRC connection to the access network device, and the terminal device indicates, based on the RRC setup request message, that the terminal device is in the first mode. The access network device learns, based on the RRC setup request message, that the terminal device is in the first mode. For example, the RRC setup request message may carry the first indication information, and the first indication information indicates that the terminal device is in the first mode. For another example, the RRC setup request message may carry the current version information of the terminal device, and the current version information of the terminal device indicates that the terminal device is in the first mode. For another example, the RRC setup request message may carry the current version information of the terminal device, and the current version information of the terminal device indicates that the terminal device is in the first mode. S202 may include S202e2: The access network device sends an RRC response message to the terminal device, where the RRC response message includes the protocol information. Optionally, the RRC response message may be an RRC setup (RRC setup) message, and the RRC setup message indicates that the access network device accepts an RRC setup request of the terminal device. Optionally, the RRC response message may be an RRC reject (RRC reject) message, and the RRC reject message indicates that the access network device rejects an RRC setup request of the terminal device.

For example, in the scenario 5, the access network device is the RAN shown in FIG. 1.

Optionally, after S201, the method 200 further includes: The network device indicates, to the terminal device, a service that can be supported by the terminal device in the first mode, and the terminal device learns, from the network device, the service supported by the terminal device in the first mode. In this way, the terminal device may determine the service that can be initiated by the terminal device. For example, the network device indicates, to the terminal device, that the terminal device can support, in the first mode, a service of making an emergency call.

Refer to FIG. 2 again. After the terminal device receives the protocol information in any one of the foregoing manners, the method further includes:
S203: The terminal device updates the current protocol version of the terminal device based on the protocol information.

Specifically, if the protocol information indicates the upgrade package, the terminal device may upgrade the current protocol version based on the upgrade package indicated by the protocol information, to obtain an upgraded protocol version. If the protocol information indicates the downgrade package, the terminal device may degrade the current protocol version of the terminal device based on the downgrade package indicated by the protocol information, to obtain a degraded protocol version. If the protocol version indicates the protocol patch, the terminal device may patch the current protocol version based on the protocol patch, to obtain a patched protocol version, and the like.

Optionally, after S203, the terminal device exits the first mode. That is, the terminal device may exit the first mode after updating the current protocol version.

Optionally, after S202, after exiting the first mode, the terminal device performs S203. To be specific, after receiving the protocol information from the network device, the terminal device may first exit the first mode, and then update the current protocol version.

Optionally, if there is the third timer, the terminal device may exit the first mode after the third timer expires. S203 may be performed before the third timer expires or after the third timer expires, but S202 may be performed before the third timer expires. In other words, it needs to be ensured that the terminal device receives the protocol information before the third timer expires. The terminal device may update the protocol version based on the protocol information before or after the third timer expires.

Optionally, even if there is the third timer, in another embodiment, that the terminal device may exit the first mode after receiving the protocol information in S202 is not limited by whether the third timer expires, or that the terminal device may exit the first mode after updating the current protocol version in S203 is not limited by whether the third timer expires. In other words, the terminal device maintains the third timer, to avoid a case in which the terminal device is always in the first mode and cannot exit the first mode. If the terminal device receives the protocol information in S202, it may be used as a trigger condition for exiting the first mode. Alternatively, if the terminal device updates the current protocol version in S203, it may be used as a trigger condition for exiting the first mode. The trigger condition for the terminal device for exiting the first mode is not limited in this embodiment of this application.

In the method 200, when the terminal device is in the first mode, the terminal device may indicate, to the network device, that the terminal device is in the first mode. After learning that the terminal device is in the first mode, the network device may send the protocol information to the terminal device, and the terminal device may update the current protocol version based on the protocol information. This avoids a problem that the terminal device cannot update the protocol version.

To better describe the foregoing method 200, the following provides examples for description.

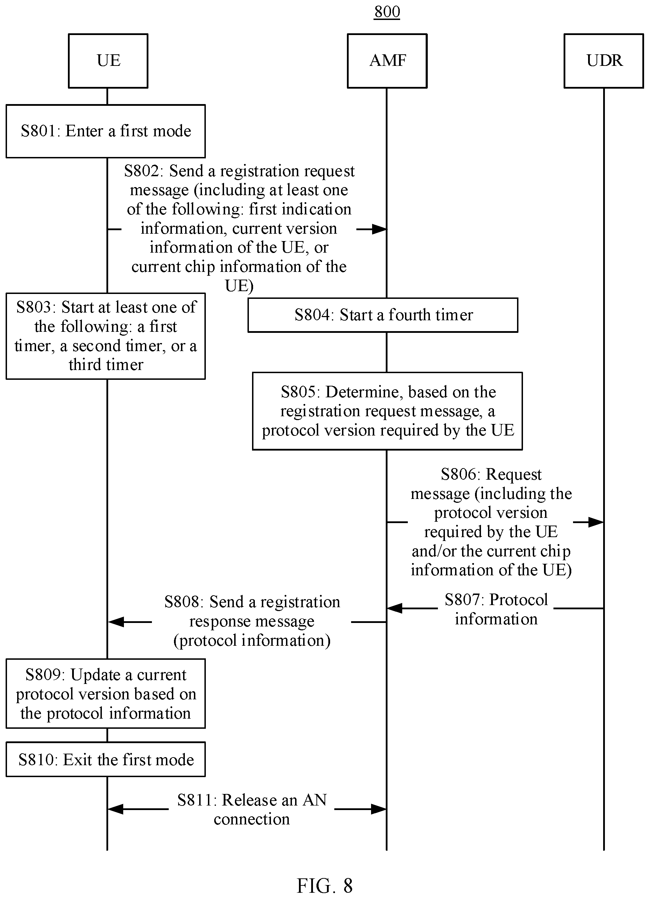

FIG. 8 shows a communication method 800 according to an embodiment of this application. In the communication method 800, a second device may be an AMF, and a first device may be a UE. The method 800 corresponds to the foregoing scenario 1. As shown in FIG. 8, the method 800 includes the following steps.

S801: The UE enters a first mode.

Specifically, after the UE meets a condition for entering the first mode, the UE enters the first mode. Specifically, for the condition for entering the first mode, refer to the description of the method 200.

It may be understood that, for the description of the first mode, refer to the description of the method 200.

Optionally, the UE may trigger S802 after entering the first mode.

S802: The UE sends a registration request (registration request) message to the AMF, and the AMF receives the registration request message, and indicates, based on the registration request message, that the UE is in the first mode.

Optionally, the registration request message shown in FIG. 8 may carry at least one of the following: first indication information indicating that the UE is in the first mode, current version information of the UE, or current chip information of the UE. Specifically, for the first indication information, the current chip information of the UE, and the current version information of the UE, refer to the description of the method 200.

S803: The UE starts at least one of the following: a first timer, a second timer, or a third timer.

Specifically, start time of the first timer, the second timer, and the third timer is different, and execution time of S803 is different. For example, the start time of the first timer, the second timer, or the third timer may be a moment at which the UE performs S801, or a moment at which the UE performs S802. If the start time of the first timer, the second timer, or the third timer may be a moment at which the UE performs S801, the UE performs S803 when performing S801. If the start time of the first timer, the second timer, or the third timer may be a moment at which the UE performs S802, the UE performs S803 when performing S802.

Before the first timer expires, the UE no longer repeatedly enters the first mode.

Before the second timer expires, the UE no longer sends the registration request message to the AMF.

After the third counter expires, the UE exits the first mode.

S804: The AMF starts a fourth timer.

Optionally, the AMF determines a moment at which the UE enters the first mode, and starts the fourth timer.

Optionally, after S802, the AMF may determine that the UE enters the first mode, and the AMF may start the fourth timer when performing S802.

Optionally, before S801, the method 800 further includes: A RAN determines that a protocol version of the UE is incompatible with a protocol version of the RAN, the RAN may send, to the UE, indication information for entering the first mode, and the UE enters the first mode based on the indication information, for entering the first mode, that is sent by the RAN. That is, the RAN may trigger, based on the indication information for entering the first mode, the UE to perform S801.

Optionally, the RAN may send, to the AMF, a notification message indicating that the UE enters the first mode, and the AMF determines, based on the notification message, that the UE enters the first mode. The AMF may start the fourth timer when receiving the notification message.

Before the fourth timer expires, even if the AMF receives the registration request message from the UE again and learns, based on the registration request message, that the UE is in the first mode, the AMF no longer determines protocol version information required by the UE, the AMF no longer sends the protocol information to the UE, or the AMF no longer requests the protocol information from a UDR. That is, the AMF does not perform any one of S805 to S808 again. In this way, an attacker can be prevented from initiating a registration request again by using the UE. This helps avoid a DDoS attack.

S805: The AMF determines, based on the registration request message, the protocol version required by the UE.

Specifically, for the AMF determining the protocol version required by the UE, refer to the description of the method 200.

Optionally, if the AMF may store protocol information that is required by the UE and that corresponds to the protocol version required by the UE, S808 is performed.

Optionally, if the AMF does not store protocol information that is required by the UE and that corresponds to the protocol version required by the UE, and the UDR stores the protocol information that is required by the UE and that corresponds to the protocol version required by the UE, S806 is performed.

S806: The AMF sends a request message to the UDR, and the UDR receives the request message from the AMF, where the request message is used to request, from the UDR, the protocol information required by the UE.

Optionally, if the registration request message includes the chip information, as shown in FIG. 8, the request message includes the chip information, and the UDR may determine, based on the chip information carried in the request message, the protocol information required by the UE.

Optionally, as shown in FIG. 8, the request message may include the protocol version required by the UE, for example, include a version number of the protocol version required by the UE. The UDR may determine, based on the protocol version required by the UE, the protocol information required by the UE.

Optionally, as shown in FIG. 8, the request message may include the chip information and the protocol version required by the UE, and the UDR may determine, based on the chip information and the protocol version required by the UE, the protocol information required by the UE.

Optionally, the request message may further include an identity (identity, ID) of the UE.

In some cases, the AMF may request, from a server, the protocol information required by the UE. Optionally, when the AMF does not store the protocol information required by the UE, the AMF may request, from the server, the protocol information required by the UE. Optionally, if neither the AMF nor the UDR stores the protocol information required by the UE, the AMF may request, from the server, the protocol information required by the UE. For example, the AMF may send the request message to the UDR, and a response message, returned by the UDR, of the request message does not include the protocol information required by the UE. In this case, the AMF determines that the UDR does not store the protocol information required by the UE. For another example, a device that stores the protocol information is specified in a protocol, and the AMF may determine, according to a protocol specification, whether the UDR and the AMF store the protocol information required by the UE.

Optionally, the AMF sends a request message to a server, and the server receives the request message from the AMF, where the request message is used to request, from the server, the protocol information required by the UE.

Optionally, if the registration request message includes the chip information, the AMF may determine the server based on the chip information. For example, if the chip information indicates that a current chip of the terminal device is a chip of a vendor A, the AMF determines that the server is a server of the vendor A. For another example, if the chip information indicates that a current chip of the terminal device is a chip of a vendor B, the AMF determines that the server is a server of the vendor B.

Optionally, the request message sent by the AMF to the server may further include the protocol version required by the UE, for example, include a version number of the protocol version required by the UE. The server may determine, based on the protocol version required by the UE, the protocol information required by the UE.

Optionally, the request message sent by the AMF to the server may include the chip information and the protocol version required by the UE, and the server may determine, based on the chip information and the protocol version required by the UE, the protocol information required by the UE.

Optionally, the request message sent by the AMF to the server may further include an identity (identity, ID) of the UE.

S807: The UDR sends the protocol information to the AMF based on the request message, and the AMF receives the protocol information from the UDR.

S808: The AMF sends a registration response message to the UE, and the UE receives the registration response message from the AMF, where the registration response message includes the protocol information.

Optionally, the registration response message may be a registration accept message or a registration reject message. The registration accept message indicates that the AMF accepts the registration request of the UE. The registration reject message indicates that the AMF rejects the registration request of the UE.

Optionally, as shown in FIG. 8, a service that can be supported by the UE in the first mode may be further indicated to the UE based on the registration response message. For example, the registration response message may carry second indication information, and the second indication information may indicate the service that can be supported by the UE in the first mode. The UE may determine, based on the registration response message, the service that can be supported by the UE in the first mode, to initiate the service supported by the UE. For example, the second indication information may indicate a service type or a service level of the service supported by the UE in the first mode. For example, the UE is a mobile phone, the second indication information indicates a service level 1, and the service level 1 indicates that the UE can make an emergency call and receive the pushed protocol information. For another example, the second indication information indicates a service level 2, and the service level 2 indicates that a common call can be made in addition to a service listed in the service level 1. For another example, third indication information indicates a service level 3, and the service level 3 indicates that the UE is further allowed to upload, based on the service level 2, a data packet corresponding to a high-priority service.

Optionally, after learning that the UE is in the first mode, the AMF may determine whether to accept registration of the UE. In a process of determining whether to accept registration of the UE, an authentication procedure for the UE may be omitted, mobility restriction (mobility restriction) detection may be skipped, or access restriction (access restriction) detection may be skipped. In this way, the AMF skips these steps. This can save registration time of the UE. The protocol information can be quickly pushed to the UE. This avoids a case in which the UE cannot register with a network for a long time.

S809: The UE updates the current protocol version based on the protocol information.

It should be noted that, if there is the third timer, S808 needs to be performed before the third timer expires.

It may be understood that, even if the registration response message received by the UE in S808 is the registration reject message, after updating the current protocol version, the UE may initiate a registration procedure again based on an updated protocol version.

S810: The UE exits the first mode.

Optionally, after S809 is performed, S810 is performed. In other words, after the UE updates the current protocol version, the UE exits the first mode.

Optionally, after S810 is performed, S809 is performed. In other words, after the UE exits the first mode, the UE updates the current protocol version.

Optionally, if there is the third timer, S810 is performed after the third timer expires. Optionally, if there is the third timer, the UE may not be limited by whether the third timer expires or not, and S810 is performed after S808. Optionally, if there is the third timer, the UE may not be limited by whether the third timer expires or not, and S810 is performed after S809.

S811: The UE releases an access network (access network, AN) connection to the AMF.

Optionally, the UE and the AMF may separately establish the AN connection, or the UE and the AMF may establish the AN connection in a message exchange process. For example, the UE may establish the AN connection in S802, or separately establish the AN connection before S802.

It may be understood that S811 may be performed after S808, but a sequence of S811 and S809 or S810 is not limited. In other words, the UE may release the AN connection to the AMF before or after exiting the first mode, or before or after the UE updates the current protocol version. This is not limited in this embodiment of this application.

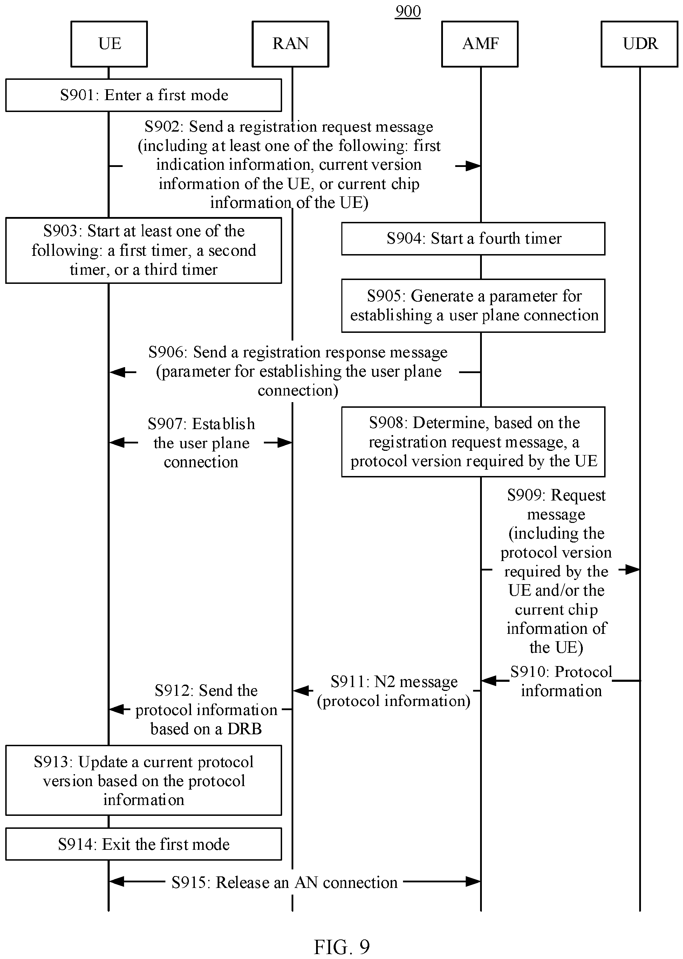

In the method 800, the AMF sends the protocol information to the UE in a control plane procedure. With reference to the method 900 in FIG. 9, the description is as follows: The AMF sends the protocol information to the UE in a user plane procedure. The method 900 corresponds to the foregoing scenario 2.

S901 to S904 are respectively the same as S801 to S804. To avoid repetition, details are not described again.

S905: The AMF generates a parameter for establishing a user plane connection.

Optionally, the parameter for establishing the user plane connection may include at least one of a protocol data unit (protocol data unit, PDU) session identifier, a PDU session type, a PDU session mode, an aggregate maximum bit rate (aggregate maximum bit rate, AMBR), a procedure transaction identity (procedure transaction identity, PTI), a PDU session establishment accept message identifier, a service and session continuity (service and session continuity, SSC) mode, or a quality of service (quality of service, QoS) rule.

Optionally, the parameter for establishing the user plane connection may also be referred to as a parameter for establishing a protocol data unit (protocol data unit, PDU) session.

Optionally, the AMF may build the parameter for establishing the user plane connection. To be specific, the parameter that is used to establish the user plane connection and that is built by the AMF is used to establish a "false" PDU session rather than a general PDU session. A user plane connection of the general PDU session includes a user plane connection between the UE and a RAN, a user plane connection between the RAN and a UPF, and a user plane connection between the UPF and a DN. The parameter that is used to establish the user plane connection and that is built by the AMF is used to enable the UE to establish the user plane connection to the RAN, and the user plane connection between the RAN and the UPF and the user plane connection between the UPF and the DN do not need to be established.

S906: The AMF sends a registration response message to the UE, and the UE receives the registration response message from the AMF. The registration response message includes the parameter for establishing the user plane connection.

Optionally, the registration response message may include a service that is indicated to the UE and that can be supported by the UE in the first mode. For example, the registration response message may include the second indication information in the method 800.

S907: The UE establishes the user plane connection to the RAN based on the parameter for establishing the user plane connection.

The user plane connection between the UE and the RAN may be referred to as a DRB.

S908 to S910 are respectively the same as S805 to S807. To avoid repetition, details are not described again.

It may be understood that a sequence of any one of S905 to S907 and any one of S908 to S910 is not limited. Any one of S905 to S907 may be performed before, after, or at the same time as any one of S908 to S910.

S911: The AMF sends an N2 message to the RAN, and the RAN receives the N2 message, where the N2 message includes the protocol information in S910.

Optionally, the N2 message may be an N2 request message or an N2 response message.

S911 is performed after S907 and S911.

S912: The RAN sends the protocol information to the UE based on the DRB, and the UE receives the protocol information based on the DRB.

S913 and S914 are respectively the same as S809 and S810.

S915: The UE releases the AN connection to the AMF.

It may be understood that S915 may be performed after S906, but there is no limitation on a sequence of S915 and any one of S907 to S914, and S915 may be performed before, after, or at the same time as any one of S907 to S914.

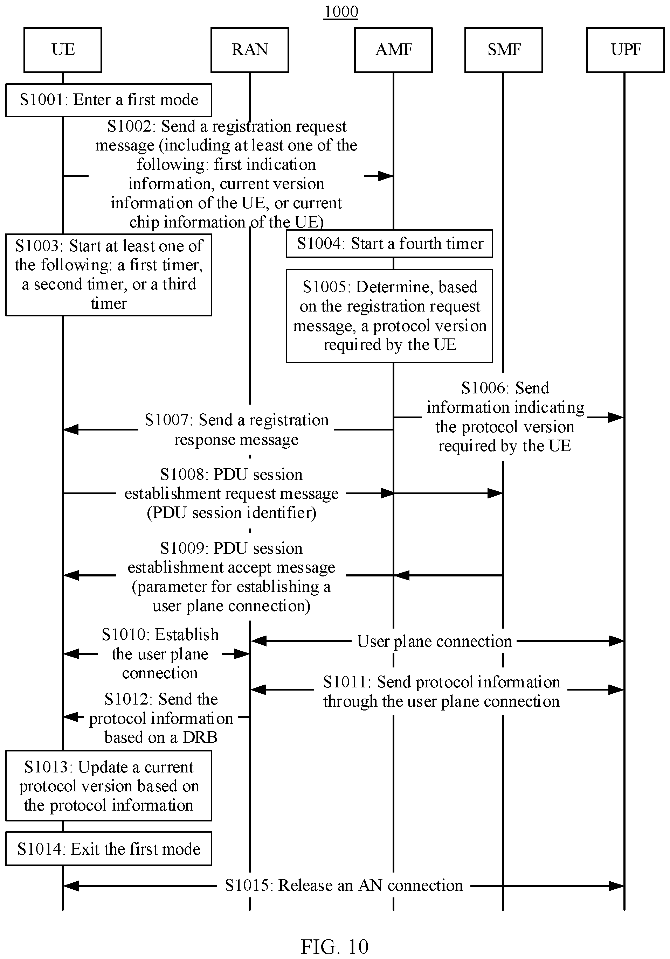

As described in the method 900, the RAN may send the protocol information to the UE based on the DRB (or the user plane procedure) between the RAN and the UE, and the parameter for establishing the user plane connection between the RAN and the UE is generated by the AMF. With reference to FIG. 10, the following describes a process in which the UE establishes a true PDU session. In other words, the parameter for establishing the user plane connection is not generated by the AMF, but is sent to the UE by an SMF. A method 1000 corresponds to the foregoing scenario 2. The method 1000 includes the following steps.

S1001 to S1005 are respectively the same as S801 to S805.

S1006: The AMF sends, to a UPF, information indicating the protocol version required by the UE.

It may be understood that after S1006, the UPF may obtain protocol information based on the protocol version required by the UE. Specifically, a method for obtaining the protocol information by the UPF is similar to the method for obtaining the protocol information by the AMF in the method 800. To avoid repetition, details are not described again.

It should be noted that S1005 and S1006 are before S1011, but a sequence of S1005 and S1006 and any one of S1007 to S1010 is not limited, and S1005 and S1006 may be performed before, after, or at the same time as any one of S1007 to S1010.

S1007: The AMF sends a registration response message to the UE.

The registration response message may be a registration accept message.

It should be noted that there is no limitation on a sequence of S1007 and S1005, and S1007 may be performed before, after, or at the same time as S1005.

S1008: The UE sends a PDU session establishment request message to the AMF, the AMF may send the PDU session establishment request message to an SMF, and the SMF receives the PDU session establishment request message from the AMF. The PDU session establishment request message may include a PDU session identifier.

Optionally, the PDU session establishment request message may further include network slice selection assistance information (network slice selection assistance information, NSSAI) and the like.

Optionally, the PDU session establishment request message may further include at least one of first indication information indicating that the UE is in the first mode, current version information of the UE, or current chip information of the UE. In this case, the registration request message in S1002 may not include at least one of the first indication information indicating that the UE is in the first mode, the current version information of the UE, or the current chip information of the UE, that is included in the PDU session establishment request message. That is, the UE may indicate, to the AMF in S1002, that the UE is in the first mode, or may indicate, to the AMF in S1008, that the UE is in the first mode.

It may be understood that, if the UE indicates, to the AMF in S1008, that the UE is in the first mode, S1003 and S1004 may be performed after S1008.

S1009: The SMF may send a PDU session accept message to the AMF, and the AMF sends the PDU session accept message to the UE, where the PDU session accept message includes a parameter for establishing a user plane connection.

For a description of the parameter for establishing the user plane connection, refer to a description of a method 900.

It may be understood that, after S1009 and S1010 are performed, a user plane connection between the UPF and a RAN is also established. Specifically, for a process of establishing the user plane connection between the UPF and the RAN, refer to the conventional technology.

S1010: The UE establishes a user plane connection to the RAN based on the parameter for establishing the user plane connection.

The user plane connection between the UE and the RAN may be referred to as a DRB.

S 10 11: The UPF sends the protocol information to the RAN through the user plane connection between the UPF and the RAN.

Specifically, the UPF may obtain the protocol information after S 1006, and then perform S1011.

S1012 to S1014 are respectively the same as S912 to S914.

S1015: The UE releases an AN connection.

Optionally, the UE and each network element in FIG. 10 may separately establish an AN connection, or the UE and each network element in FIG. 10 may establish an AN connection in a message exchange process. For example, the UE may establish an AN connection in S1002, or separately establish an AN connection before S1002.

The AN connection is used by the UE to send exchange information (for example, information is exchanged in S1002 and S1007 to S1010) to the network element in FIG. 10.

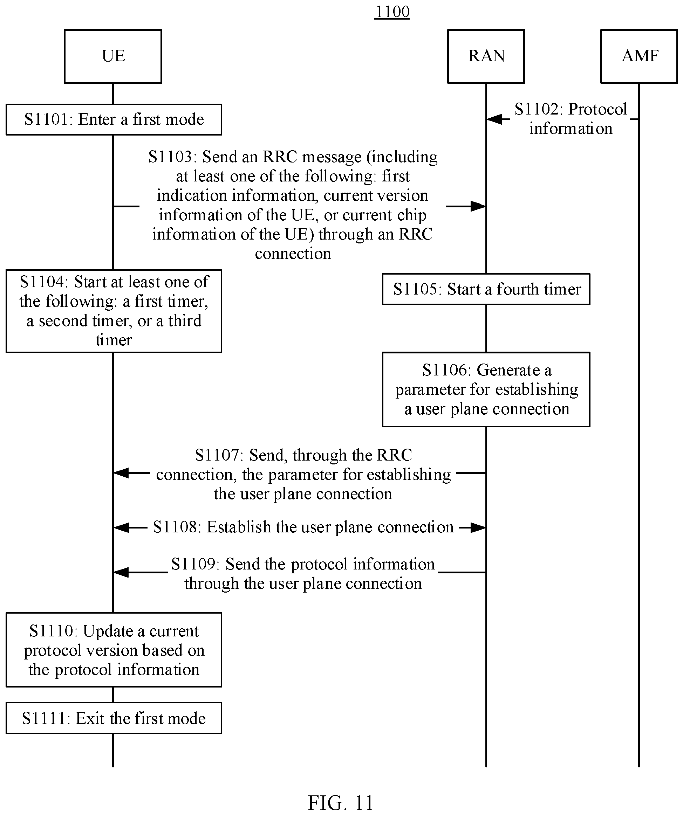

As described in FIG. 9 and FIG. 10, the UE indicates, to the AMF in a registration process, that the UE is in the first mode, and the RAN may send the protocol information to the UE based on the DRB (or the user plane procedure) between the RAN and the UE. With reference to a method 1100 in FIG. 11, the description is as follows: A UE indicates, based on an RRC message, that the UE is in the first mode, and a RAN sends protocol information to the UE in a user plane procedure. The method 1100 corresponds to the scenario 3. The method 1100 includes the following steps.

S1101 is the same as S801.

S 1102: An AMF sends an N2 message to the RAN, and the RAN receives the N2 message from the AMF, where the N2 message includes the protocol information.

A method for obtaining the protocol information by the AMF is the same as that in the method 800. To avoid repetition, details are not described in this embodiment of this application.

Optionally, the N2 message may be an N2 request message or an N2 response message.

It may be understood that S1102 may be sent in any N2 message exchanged between the AMF and the RAN, and this is not limited to a sending occasion. For example, when the AMF establishes a connection to the RAN, the AMF may send the N2 message to the RAN, where the N2 message includes the protocol information. For another example, the AMF may send the N2 message to the RAN based on a request of the RAN, where the N2 message includes the protocol information. For example, after S1103, the RAN determines that the UE is in the first mode, and the RAN may send a request message to the AMF, where the request message is used to request the protocol information from the AMF. The AMF may send the protocol information to the RAN based on the request message. S1102 is performed before or after any one of S1101 to S1108 in the method 1100. This is not limited in this embodiment of this application.

In an alternative manner of 51102, the RAN may obtain the protocol information from a server, or the RAN may obtain the protocol information from a UDR, or the RAN stores the protocol information. For example, when the RAN establishes a connection to the server or the UDR, the server or the UDR may send the protocol information to the RAN. For another example, the server or the UDR may send the protocol information to the RAN based on the request of the RAN. For example, after S1103, the RAN determines that the UE is in the first mode, and the RAN may send the request message to the server or the UDR. The request message is used to request the protocol information from the server or the UDR, and the server or the UDR may send the protocol information to the RAN based on the request message. A manner in which the RAN obtains the protocol information is similar to the manner in which the AMF obtains the protocol information in the method 800. To avoid repetition, details are not described again. That is, the protocol information in the method 1100 may be obtained by the RAN from the AMF, stored by the RAN, obtained by the RAN from the server, or obtained by the RAN from the UDR.

In the method 1100, RRC between the UE and the RAN is in a connected state.

After the UE enters the first mode, the UE may be triggered to perform S1103.

S1103: The UE sends the RRC message to the RAN through an RRC connection, and the RAN receives the RRC message from the UE through the RRC connection.

The RRC message indicates that the UE is in the first mode, and the RAN learns, based on the RRC message, that the UE is in the first mode.

Optionally, the RRC message shown in FIG. 11 may carry at least one of first indication information indicating that the UE is in the first mode, current version information of the UE, or current chip information of the UE. Specifically, for the first indication information, the current chip information of the UE, and the current version information of the UE, refer to the description of the method 200.

S1104 is similar to S804.

Different from S804, in S1104, before a second timer expires, the UE no longer sends the RRC message to the RAN, in other words, the UE no longer indicates, based on the RRC message, that the UE is in the first mode. Other descriptions are the same as those in S804.

S1105: The RAN starts a fourth timer.

Optionally, the RAN determines a moment at which the UE enters the first mode, and starts the fourth timer.

Optionally, after S1103, the RAN may determine that the UE enters the first mode, and the RAN may start the fourth timer when performing S1103.

Optionally, the method 1100 further includes: The RAN determines that a protocol version of the UE is incompatible with a protocol version of the RAN, the RAN may send, to the UE, indication information for entering the first mode, and the UE enters the first mode based on the indication information, for entering the first mode, that is sent by the RAN. That is, the RAN may trigger, based on the indication information for entering the first mode, the UE to perform S1101. Optionally, the RAN starts the fourth timer when sending, to the UE, the indication information for entering the first mode.

Before the fourth timer expires, even if the RAN receives the RRC message from the UE again and learns, based on the RRC message, that the UE is in the first mode, the RAN no longer determines protocol version information required by the UE, the RAN no longer sends the protocol information to the UE, or the RAN no longer obtains the protocol information. That is, the RAN does not perform any one of S1106 to S 1109 again. In this way, an attacker can be prevented from initiating the RRC message again by using the UE. This helps avoid a distributed denial of service (distributed denial of service, DDoS) attack.

S1106: The RAN generates a parameter for establishing a user plane connection.

Optionally, the parameter for establishing the user plane connection may also be referred to as a parameter for establishing a protocol data unit (protocol data unit, PDU) session. For the description of the parameter for establishing the user plane connection, refer to the description of the method 900.

Optionally, the RAN may build the parameter for establishing the user plane connection. To be specific, the parameter that is used to establish the user plane connection and that is built by the RAN is used to establish a "false" PDU session rather than a general PDU session. A user plane connection of the general PDU session includes a user plane connection between the UE and the RAN, a user plane connection between the RAN and a UPF, and a user plane connection between the UPF and a DN. The parameter that is used to establish the user plane connection and that is built by the RAN is used to enable the UE to establish the user plane connection to the RAN, and the user plane connection between the RAN and the UPF and the user plane connection between the UPF and the DN do not need to be established.

S1107: The RAN sends, to the UE through the RRC connection, the parameter for establishing the user plane connection, and the UE receives, from the RAN through the RRC connection, the parameter for establishing the user plane connection.

S1108: The UE establishes the user plane connection to the RAN based on the parameter for establishing the user plane connection.

The user plane connection between the UE and the RAN may be referred to as a DRB.

S1109: The RAN sends the protocol information to the UE based on the DRB.

Specifically, for the RAN obtaining the protocol information required by the UE, refer to the description of the method 200.

Optionally, if the RAN may store the protocol information required by the UE, S1110 is performed. The protocol information that is required by the UE and that is stored by the RAN may be obtained in S1102, or may be obtained from the server or the UDR. For a manner in which the RAN obtains the protocol information from the server or the UDR, refer to the manner in which the AMF obtains the protocol information, for example, refer to S806 to S808. To avoid repetition, details are not described again.

S1110 and S1111 are respectively the same as S810 and S811.

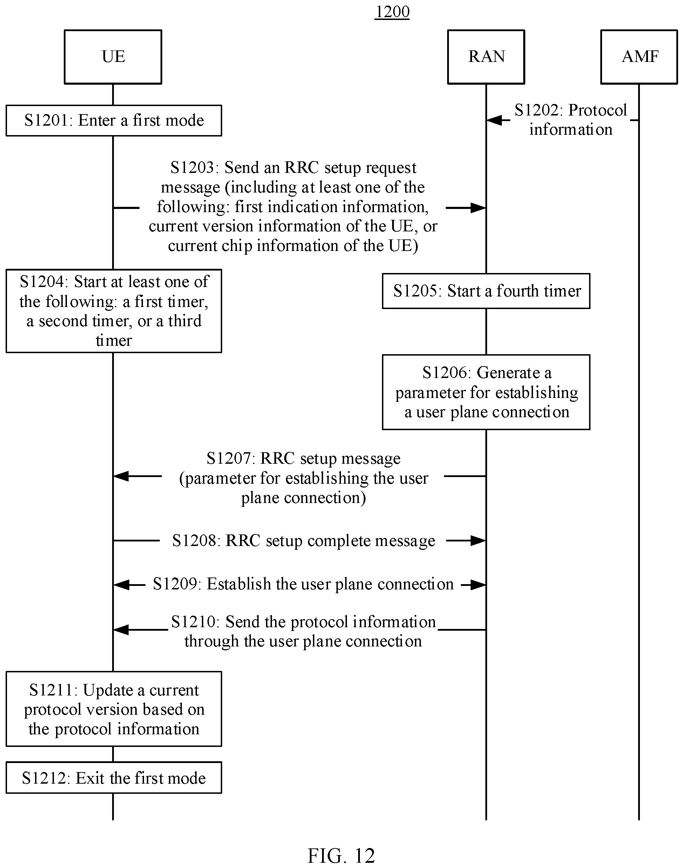

In the foregoing method 1100, the RRC message indicates that the UE is in the first mode, and the protocol information is sent in the user plane procedure. With reference to a method 1200 in FIG. 12, the description is as follows: An RRC setup request message is used to support a UE being in a first mode, and protocol information is sent in a user plane procedure. The method 1200 corresponds to the foregoing scenario 4. The method 1200 includes the following steps.

S1201 and S1202 are respectively the same as S1101 and S1102.

In the method 1200, the UE is in an RRC non-connected state.

S1201 may trigger the UE to perform S1203.

S1203: The UE sends the RRC setup request (RRC setup request) message to a RAN, and the RAN receives the RRC setup request message from the UE.

The RRC setup request message indicates that the UE is in the first mode, and the RAN learns, based on the RRC setup request message, that the UE is in the first mode.

Optionally, the RRC setup request message shown in FIG. 12 may carry at least one of first indication information indicating that the UE is in the first mode, current version information of the UE, or current chip information of the UE. Specifically, for the first indication information, the current chip information of the UE, and the current version information of the UE, refer to the description of the method 200.

S1204 to S1206 are respectively the same as S1104 to S1106.

S1207: The RAN sends an RRC setup (RRC setup) message to the UE, and the UE receives the RRC setup message from the RAN, where the RRC setup message includes a parameter for establishing a user plane connection.

S1208: The UE sends an RRC setup complete (RRC setup complete) message to the RAN.

S1209 to S1212 are respectively the same as S1108 to 51111.

It should be noted that there is no limitation on a sequence of S1208 and any one of S1209 to S1212, and S1208 may be performed before, after, or at the same time as any one of S1209 to S1212.

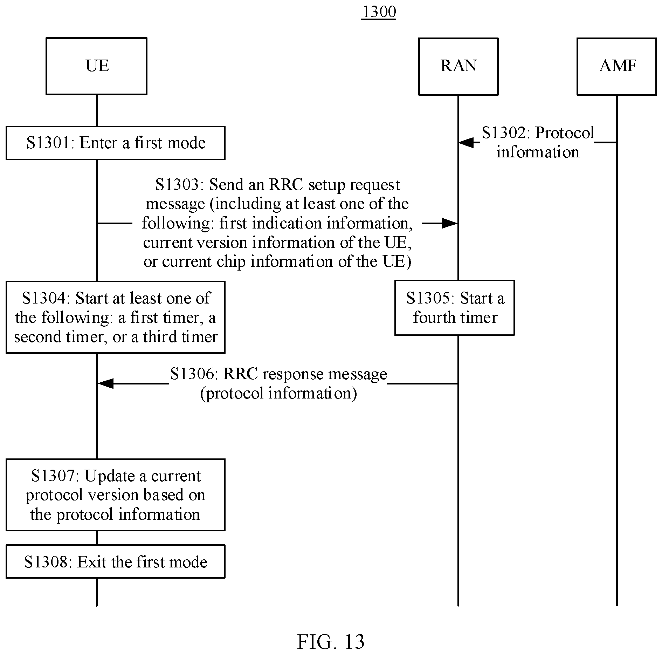

In the foregoing method 1200, the RRC setup request message indicates that the UE is in the first mode, and the protocol information is sent in the control plane procedure. With reference to a method 1300 in FIG. 13, the description is as follows: An RRC setup request message is used to support a UE being in a first mode, and protocol information is sent in a user plane procedure. The method 1300 corresponds to the foregoing scenario 5. The method 1300 includes the following steps.

S1301 to S1305 are respectively the same as S1201 to S1205.

S1306: A RAN sends an RRC response message to the UE, and the UE receives the RRC response message from the RAN, where the RRC response message includes the protocol information.

Optionally, the RRC response message may be an RRC setup (RRC setup) message, and the RRC setup message indicates that an access network device accepts an RRC setup request of a terminal device. Optionally, the RRC response message may be an RRC reject (RRC reject) message, and the RRC reject message indicates that an access network device rejects an RRC setup request of a terminal device.

S1307 and S1308 are respectively the same as S1210 and S1211.

The method 800 to the method 1300 respectively describe the communication methods in different scenarios.

It should be noted that, generally, that a protocol version of the terminal device is incompatible with a protocol version of the network device may be understood as that the protocol version of the terminal device is incompatible with a protocol version of the access network device, may be understood as that the protocol version of the terminal device is incompatible with a protocol version of the core network device, or may be understood as that the protocol version of the terminal device is incompatible with both a protocol version of the access network device and a protocol version of the core network device. For example, the terminal device includes the UE, the access network device includes the RAN, and the core network device includes the AMF.

It should be noted that the first timer, the second timer, the third timer, and the fourth timer may be associated with each other or may not be associated with each other. This is not limited in embodiments of this application. There may be one or more timers in the first timer, the second timer, the third timer, and the fourth timer, or there is no one of the four timers. This is not limited in embodiments of this application.

It may be understood that the communication methods described in FIG. 2 to FIG. 13 may be independent embodiments or may be mutually combined embodiments. For example, embodiments in the foregoing scenario 1, scenario 2, scenario 3, and scenario 4 may be independent embodiments or may be mutually combined embodiments.

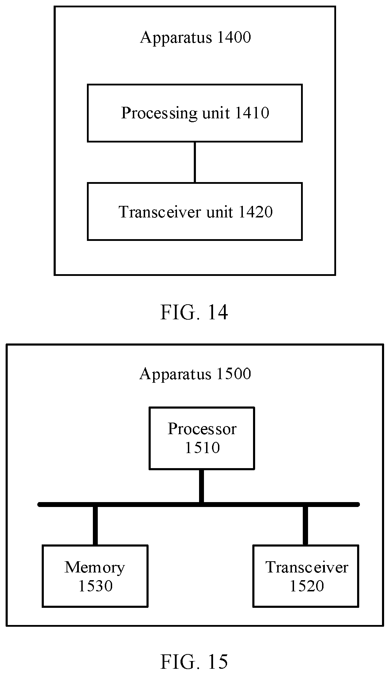

FIG. 2 to FIG. 13 describe the communication methods provided in embodiments of this application. The following describes communication apparatuses provided in embodiments of this application with reference to FIG. 14 and FIG. 15.

FIG. 14 is a schematic block diagram of a communication apparatus according to an embodiment of this application. As shown in FIG. 14, the apparatus 1400 may include a processing unit 1410 and a transceiver unit 1420.

In a possible design, the apparatus 1400 may correspond to the first device or the terminal device in the foregoing method embodiment, for example, may be a UE or a chip disposed in the UE. The apparatus 1400 is configured to perform steps or procedures corresponding to the first device, the terminal device, or the UE in the method 200 to the method 1300.

Specifically, the processing unit 1410 is configured to indicate, to a second device, that the communication apparatus is in a first mode, and a current protocol version of the communication apparatus is incompatible with a current protocol version of the second device. The transceiver unit 1420 is configured to receive protocol information from the second device, where the protocol information is used by the communication apparatus to update the current protocol version. The processing unit 1410 is further configured to update the current protocol version of the communication apparatus based on the protocol information.

Optionally, the processing unit 1410 is specifically configured to send first indication information to the second device by using the transceiver unit 1420, where the first indication information indicates that the communication apparatus is in the first mode.

Optionally, the processing unit 1410 is specifically configured to send current chip information of the communication apparatus to the second device by using the transceiver unit 1420; and/or
the processing unit 1410 is specifically configured to send current protocol version information of the communication apparatus to the second device by using the transceiver unit 1420, where the current version information of the communication apparatus indicates the current protocol version of the communication apparatus.

Optionally, the processing unit 1410 is further configured to start a first timer at a first moment. Before the first timer expires, the communication apparatus no longer repeatedly enters the first mode, where duration of the first timer is first duration, and the first moment is a moment at which the communication apparatus enters the first mode, or a moment at which the communication apparatus indicates, to the second device, that the communication apparatus is in the first mode.

Optionally, the processing unit 1410 is further configured to start a second timer at a second moment. Before the second timer expires, the processing unit no longer indicates, to the second device, that the communication apparatus is in the first mode, where duration of the second timer is second duration, and the second moment is a moment at which the communication apparatus enters the first mode, or a moment at which the processing unit indicates, to the second device, that the communication apparatus is in the first mode.

Optionally, the processing unit 1410 is further configured to start a third timer at a third moment. After the third timer expires, the communication apparatus exits the first mode, where duration of the third timer is third duration, and the third moment is a moment at which the communication apparatus enters the first mode, or a moment at which the processing unit indicates, to the second device, the communication apparatus is in the first mode.

Optionally, the processing unit 1410 is further configured to learn of, from the second device, a service that can be supported by the communication apparatus in the first mode.

Optionally, the second device is a core network device. The processing unit 1410 is specifically configured to: send a registration request message to the core network device by using the transceiver unit, and indicate, based on the registration request message, that the communication apparatus is in the first mode.

Optionally, the second device is a core network device. The transceiver unit 1420 is specifically configured to: receive a registration accept message or a registration reject message from the core network device, where the registration accept message or the registration reject message includes the protocol information; or receive the protocol information from the core network device based on a data radio bearer DRB between the communication apparatus and an access network device.

Optionally, the second device is an access network device. The processing unit 1410 is specifically configured to: send, through a radio resource control RRC connection, an RRC message to the access network device by using the transceiver unit, and indicate, based on the RRC message, that the communication apparatus is in the first mode. The transceiver unit 1420 is specifically configured to receive the protocol information from the access network device based on a DRB between the communication apparatus and the access network device.

Optionally, the second device is an access network device. The processing unit 1410 is specifically configured to: send an RRC setup request message to the access network device by using the transceiver unit 1420, and indicate, based on the RRC setup request message, that the communication apparatus is in the first mode. The transceiver unit 1420 is specifically configured to receive the protocol information from the access network device based on a DRB between the communication apparatus and the access network device.

Optionally, the transceiver unit 1420 is further configured to: send a PDU session establishment request message to the core network device, and receive a PDU session establishment accept message from the core network device, where the PDU session establishment accept message includes a parameter for establishing a user plane connection. The processing unit 1410 is further configured to establish the user plane connection based on the parameter for establishing the user plane connection, where the user plane connection corresponds to the DRB.

Optionally, the second device is an access network device. The processing unit 1410 is specifically configured to: send a radio resource control RRC setup request message to the access network device by using the transceiver unit, and indicate, based on the RRC setup request message, that the communication apparatus is in the first mode.

The transceiver unit 1420 is specifically configured to receive an RRC response message from the access network device, where the RRC response message includes the protocol information.

In a possible design, the apparatus 1400 may correspond to the second device, the network device, the access network device, the core network device, the AMF, or the RAN in the foregoing method embodiments, for example, may be an AMF, or a chip disposed in the AMF, or for another example, may be a RAN, or a chip disposed in the RAN. The apparatus 1400 is configured to perform steps or procedures corresponding to the second device, the network device, the access network device, the core network device, the AMF, or the RAN in the method 200 to the method 1300.

Specifically, the processing unit 1410 is configured to learn that the first device is in the first mode, and a current protocol version of the communication apparatus is incompatible with a current protocol version of the first device. The transceiver unit 1420 is configured to send protocol information to the first device, where the protocol information is used by the first device to update the current protocol version.

Optionally, the processing unit 1410 is specifically configured to receive first indication information from the first device by using the transceiver unit 1420, where the first indication information indicates that the first device is in the first mode.

Optionally, the processing unit 1410 is specifically configured to receive current chip information of the first device from the first device by using the transceiver unit 1420.

Optionally, the processing unit 1410 is specifically configured to receive current version information of the first device from the first device by using the transceiver unit 1420, where the current version information of the first device indicates the current protocol version of the first device.

Optionally, the processing unit 1410 is further configured to: determine, based on the current protocol version of the communication apparatus, a protocol version required by the first device, and obtain the protocol information based on the protocol version required by the first device.

Optionally, if the transceiver unit 1420 receives the current version information of the first device from the first device, the processing unit 1410 is specifically configured to: if a protocol version indicated by the current version information of the first device is incompatible with the current protocol version of the communication apparatus, determine the current protocol version of the communication apparatus as the protocol version required by the first device.

Optionally, the processing unit 1410 is specifically configured to send a request message to a third device by using the transceiver unit 1420, where the request message is used to request the protocol information from the third device. The processing unit 1410 is specifically configured to receive the protocol information from the third device by using the transceiver unit 1420.

Optionally, the request message includes the protocol version required by the first device, and/or if the transceiver unit 1420 receives the current chip information of the first device from the first device, the request message includes the current chip information of the first device.

Optionally, the processing unit 1410 is further configured to start a fourth timer at a fourth moment. Before the fourth counter expires, the processing unit learns again, from the first device, that the first device is in the first mode, and then no longer sends the protocol information to the first device, where duration of the fourth timer is fourth duration, and the fourth moment is a moment at which the processing unit determines that the first device is in the first mode.

Optionally, the processing unit 1410 is further configured to indicate, to the first device, a service that can be supported by the first device in the first mode.

Optionally, the first device is the terminal device. The processing unit 1410 is specifically configured to: receive a registration request message from the terminal device by using the transceiver unit 1420, and indicate, based on the registration request message, that the terminal device is in the first mode.

Optionally, the first device is the terminal device. The transceiver unit 1420 is specifically configured to send a registration accept message or a registration reject message to the terminal device, where the registration accept message or the registration reject message includes the protocol information. Alternatively, the transceiver unit 1420 is specifically configured to send the protocol information to the terminal device based on a data radio bearer DRB between the access network device and the terminal device.

Optionally, the first device is the terminal device. The processing unit 1410 is specifically configured to: receive, through a radio resource control RRC connection, an RRC message from the terminal device by using the transceiver unit 1420, and indicate, based on the RRC message, that the terminal device is in the first mode. The transceiver unit 1420 is specifically configured to send the protocol information to the terminal device based on a DRB between the communication apparatus and the terminal device.

Optionally, the first device is the terminal device. The processing unit 1410 is specifically configured to: receive an RRC setup request message from the terminal device by using the transceiver unit 1420, and indicate, based on the RRC setup request message, that the terminal device is in the first mode. The transceiver unit 1420 is specifically configured to send the protocol information to the terminal device based on a DRB between the communication apparatus and the terminal device.

Optionally, the transceiver unit 1420 is further configured to: receive a PDU session establishment request message from the terminal device, and send a PDU session establishment accept message to the terminal device, where the PDU session establishment accept message includes a parameter for establishing a user plane connection, and the user plane connection corresponds to the DRB.

Optionally, the processing unit 1410 is further configured to generate the parameter for establishing the user plane connection; and the transceiver unit 1420 is further configured to send, to the terminal device, the parameter for establishing the user plane connection, where the user plane connection corresponds to the DRB.

Optionally, the first device is the terminal device. The processing unit 1410 is specifically configured to: receive an RRC setup request message from the terminal device by using the transceiver unit 1420, and indicate, based on the RRC setup request message, that the terminal device is in the first mode. The transceiver unit 1420 is specifically configured to send an RRC response message to the terminal device, where the RRC response message includes the protocol information.

It should be understood that the apparatus 1400 herein is embodied in the form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1400 may be specifically the first device, the terminal device, or the UE in the foregoing embodiments, and may be configured to perform procedures and/or steps corresponding to the first device, the terminal device, or the UE in the foregoing method embodiments; or the apparatus 1400 may be specifically the second device, the network device, the AMF, or the RAN in the foregoing embodiments, and may be configured to perform procedures and/or steps corresponding to the second device, the network device, the AMF, or the RAN in the foregoing method embodiments. To avoid repetition, details are not described herein again.

The apparatus 1400 in each of the foregoing solutions has a function of implementing corresponding steps performed by the first device, the terminal device, or the UE in the foregoing methods; or the apparatus 1400 in each of the foregoing solutions has a function of implementing corresponding steps performed by the second device, the network device, the AMF, or the RAN in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform sending/receiving operations and processing-related operations in the method embodiments.

In addition, the communication unit may alternatively be a transceiver circuit (which may include, for example, a receiving circuit and a transmitter circuit), and the processing unit may be a processing circuit. In this embodiment of this application, the apparatus in FIG. 14 may be the terminal device or the network device in the foregoing embodiment, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 15 shows a communication apparatus 1500 according to an embodiment of this application. The communication apparatus 1500 includes a processor 1510 and a transceiver 1520. The processor 1510 and the transceiver 1520 communicate with each other through an internal connection path, and the processor 1510 is configured to execute instructions, to control the transceiver 1520 to send a signal and/or receive a signal.

Optionally, the communication apparatus 1500 may further include a memory 1530. The memory 1530 communicates with the processor 1510 and the transceiver 1520 through an internal connection path. The memory 1530 is configured to store instructions, and the processor 1510 may execute the instructions stored in the memory 1530. In a possible implementation, the communication apparatus 1500 is configured to implement procedures and steps corresponding to the first device, the terminal device, or the UE in the foregoing method embodiments. In another possible implementation, the apparatus 1500 is configured to implement procedures and steps corresponding to the second device, the network device, the AMF, or the RAN in the foregoing method embodiments.

It should be understood that the communication apparatus 1500 may be specifically the first device, the terminal device, the UE, the second device, the network device, the AMF, or the RAN in the foregoing embodiments, or may be a chip or a chip system. Correspondingly, the transceiver 1520 may be a transceiver circuit of the chip. This is not limited herein. Specifically, the apparatus 1500 may be configured to perform steps and/or procedures corresponding to the first device, the terminal device, the UE, the second device, the network device, the AMF, or the RAN in the foregoing method embodiments. Optionally, the memory 1530 may include a read-only memory and a random access memory, and provide the instructions and data for the processor. A part of the memory may further include a non-volatile random access memory. For example, the memory may further store information of a device type. The processor 1510 may be configured to execute the instructions stored in the memory. When the processor 1510 executes the instructions stored in the memory, the processor 1510 is configured to perform steps and/or procedures corresponding to the first device, the terminal device, the UE, the second device, the network device, the AMF, or the RAN in the foregoing method embodiments.

In an implementation process, the steps in the foregoing methods may be completed by using a hardware integrated logical circuit in the processor, or by using instructions in a form of software. The steps of the methods disclosed with reference to embodiments of this application may be directly performed and completed by a hardware processor, or may be performed and completed by a combination of hardware and a software module in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification includes but is not limited to these and any memory of another proper type.

According to the methods provided in embodiments of this application, this application further provides a computer program product. The computer program product includes computer program code. When the computer program code is run on a computer, the computer is enabled to perform steps or procedures performed by the first device, the terminal device, the UE, the second device, the network device, the AMF, or the RAN in the embodiments shown in FIG. 2 to FIG. 13.

According to the methods provided in embodiments of this application, this application further provides a computer-readable storage medium. The computer-readable storage medium stores program code. When the program code is run on a computer, the computer is enabled to perform steps or procedures performed by the first device, the terminal device, the UE, the second device, the network device, the AMF, or the RAN in the embodiments shown in FIG. 2 to FIG. 13.

According to the methods provided in embodiments of this application, this application further provides a communication system. The communication system includes the foregoing one or more first devices and the foregoing one or more second devices. Alternatively, the communication system includes the foregoing one or more terminal devices and one or more network devices. Alternatively, the communication system includes the foregoing one or more AMFs and one or more UEs. Alternatively, the communication system includes the foregoing one or more RANs and one or more UEs. Alternatively, the communication system includes at least two network elements in the embodiments shown in FIG. 2 to FIG. 13.

The embodiments in the foregoing apparatus embodiments completely correspond to the embodiments shown in FIG. 2 to FIG. 13 in the method embodiments. A corresponding module or unit performs a corresponding step. For example, a transceiver unit (a transceiver) performs a receiving or sending step in the method embodiments, and a processing unit (a processor) performs a step other than the sending or receiving step. A function of a specific unit may be based on a corresponding method embodiment. There may be one or more processors.

In this application, "indication" may include a direct indication and an indirect indication, or may include an explicit indication and an implicit indication. Information indicated by a piece of information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or future protocol.

In embodiments of this application, "first", "second", and various numerical numbers are merely used for distinguishing for ease of description, and are not used to limit the scope of embodiments of this application. For example, different network slices are distinguished from each other, and different network devices are distinguished from each other.

It should be understood that, in this specification, "at least one" means one or more, and "a plurality of means two or more. The term "and/or" describes an association relationship between associated objects and indicates that three relationships may exist. For example, A and/or B may indicate the following cases: Only A exists, both A and B exist, and only B exists. A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, and c may indicate: a, or b, or c, a and b, a and c, b and c, or a, b, and c, where a, b, and c may be singular or plural.

A person of ordinary skill in the art may be aware that illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When the software is used for implementation, all or some of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
indicating, by a first device to a second device, that the first device is in a first mode, wherein a current protocol version of the first device is incompatible with a current protocol version of the second device;
receiving, by the first device, protocol information from the second device, wherein the protocol information is used by the first device to update the current protocol version; and
updating, by the first device, the current protocol version of the first device based on the protocol information.

2. The communication method according to claim 1, wherein the indicating, by a first device to a second device, that the first device is in a first mode comprises:
sending, by the first device, first indication information to the second device, wherein the first indication information indicates that the first device is in the first mode.

3. The communication method according to claim 1 or 2, wherein the indicating, by a first device to a second device, that the first device is in a first mode comprises:
sending, by the first device, current chip information of the first device to the second device; and/or
sending, by the first device, current protocol version information of the first device to the second device, wherein the current version information of the first device indicates the current protocol version of the first device.

4. The communication method according to any one of claims 1 to 3, wherein the communication method further comprises:
starting, by the first device, a first timer at a first moment, and skipping repeatedly entering, by the first device, the first mode before the first timer expires, wherein duration of the first timer is first duration, and the first moment is a moment at which the first device enters the first mode, or a moment at which the first device indicates, to the second device, that the first device is in the first mode; or the communication method further comprises:
starting, by the first device, a second timer at a second moment, and before the second timer expires, skipping indicating, by the first device to the second device, that the first device is in the first mode, wherein duration of the second timer is second duration, and the second moment is a moment at which the first device enters the first mode, or a moment at which the first device indicates, to the second device, that the first device is in the first mode; or the communication method further comprises:
starting, by the first device, a third timer at a third moment, and exiting, by the first device, the first mode after the third timer expires, wherein duration of the third timer is third duration, and the third moment is a moment at which the first device enters the first mode, or a moment at which the first device indicates, to the second device, that the first device is in the first mode.

5. The communication method according to any one of claims 1 to 4, wherein the communication method further comprises:
learning of, by the first device from the second device, a service that can be supported by the first device in the first mode.

6. The communication method according to any one of claims 1 to 5, wherein the first device is a terminal device, and the second device is a core network device; and the indicating, by a first device to a second device, that the first device is in a first mode comprises:
sending, by the terminal device, a registration request message to the core network device, and indicating, based on the registration request message, that the terminal device is in the first mode.

7. The communication method according to any one of claims 1 to 6, wherein the first device is the terminal device, and the second device is the core network device; and the receiving, by the first device, protocol information from the second device comprises:
receiving, by the terminal device, a registration accept message or a registration reject message from the core network device, wherein the registration accept message or the registration reject message comprises the protocol information;
receiving, by the terminal device, the protocol information from the core network device based on a data radio bearer DRB between the terminal device and an access network device.

8. The communication method according to any one of claims 1 to 5, wherein the first device is a terminal device, and the second device is an access network device;
the indicating, by a first device to a second device, that the first device is in a first mode comprises:
sending, by the terminal device, an RRC message to the access network device through a radio resource control RRC connection, and indicating, based on the RRC message, that the terminal device is in the first mode; and
the receiving, by the first device, protocol information from the second device comprises:
receiving, by the terminal device, the protocol information from the access network device based on a DRB between the terminal device and the access network device.

9. The communication method according to any one of claims 1 to 5, wherein the first device is a terminal device, and the second device is an access network device;
the indicating, by a first device to a second device, that the first device is in a first mode comprises:
sending, by the terminal device, an RRC setup request message to the access network device, and indicating, based on the RRC setup request message, that the terminal device is in the first mode; and
the receiving, by the first device, protocol information from the second device comprises:
receiving, by the terminal device, the protocol information from the access network device based on a DRB between the terminal device and the access network device.

10. The communication method according to any one of claims 7 to 9, wherein the communication method further comprises:
sending, by the terminal device, a PDU session establishment request message to the core network device;
receiving, by the terminal device, a PDU session establishment accept message from the core network device, wherein the PDU session establishment accept message comprises a parameter for establishing a user plane connection; and
establishing, by the terminal device, the user plane connection based on the parameter for the user plane connection, wherein the user plane connection corresponds to the DRB.

11. The communication method according to any one of claims 1 to 5, wherein the first device is a terminal device, and the second device is an access network device;
the indicating, by a first device to a second device, that the first device is in a first mode comprises:
sending, by the terminal device, a radio resource control RRC setup request message to the access network device, and indicating, based on the RRC setup request message, that the terminal device is in the first mode; and
the receiving, by the first device, protocol information from the second device comprises:
receiving, by the terminal device, an RRC response message from the access network device, wherein the RRC response message comprises the protocol information.

12. A communication method, comprising:
learning, by a second device, that a first device is in a first mode, wherein a current protocol version of the second device is incompatible with a current protocol version of the first device; and
sending, by the second device, protocol information to the first device, wherein the protocol information is used by the first device to update the current protocol version.

13. The communication method according to claim 12, wherein the learning, by a second device, that a first device is in a first mode comprises:
receiving, by the second device, first indication information from the first device, wherein the first indication information indicates that the first device is in the first mode.

14. The communication method according to claim 12 or 13, wherein the learning, by a second device, that a first device is in a first mode comprises:
receiving, by the second device, current chip information of the first device from the first device; and/or
receiving, by the second device, current version information of the first device from the first device, wherein the current version information of the first device indicates the current protocol version of the first device.

15. The communication method according to any one of claims 12 to 14, wherein the communication method further comprises:
determining, by the second device based on the current protocol version of the second device, a protocol version required by the first device; and
obtaining, by the second device, the protocol information based on the protocol version required by the first device.

16. The communication method according to claim 15, wherein if the second device receives the current version information of the first device from the first device, the determining, by the second device based on the current protocol version of the second device, version information required by the first device comprises:
if a protocol version indicated by the current version information of the first device is different from the current protocol version of the second device, determining, by the second device, the current protocol version of the second device as the protocol version required by the first device.

17. The communication method according to claim 15 or 16, wherein the obtaining, by the second device, the protocol information based on the protocol version required by the first device comprises:
sending, by the second device, a request message to a third device, wherein the request message is used to request the protocol information from the third device; and
receiving, by the second device, the protocol information from the third device.

18. The communication method according to claim 17, wherein the request message comprises the protocol version required by the first device, and/or if the second device receives the current chip information of the first device from the first device, the request message comprises the current chip information of the first device.

19. The communication method according to any one of claims 12 to 18, wherein the communication method further comprises:
starting a fourth timer at a fourth moment, and before the fourth counter expires, skipping sending, by the second device, the protocol information to the first device after learning, from the first device, that the first device is in the first mode, wherein duration of the fourth timer is fourth duration, and the fourth moment is a moment at which the second device determines that the first device is in the first mode.

20. The communication method according to any one of claims 12 to 19, wherein the communication method further comprises:
indicating, by the second device to the first device, a service that can be supported by the first device in the first mode.

21. The communication method according to any one of claims 12 to 20, wherein the first device is a terminal device, and the second device is a core network device; and the learning, by a second device, that a first device is in a first mode comprises:
receiving, by the core network device, a registration request message from the terminal device, and indicating, based on the registration request message, that the terminal device is in the first mode.

22. The communication method according to any one of claims 12 to 21, wherein the first device is a terminal device, and the second device is a core network device; and the sending, by the second device, protocol information to the first device comprises:
sending, by the core network device, a registration accept message or a registration reject message to the terminal device, wherein the registration accept message or the registration reject message comprises the protocol information; or
sending, by the core network device, the protocol information to the terminal device based on a data radio bearer DRB between an access network device and the terminal device.

23. The communication method according to any one of claims 12 to 20, wherein the first device is a terminal device, and the second device is an access network device;
the learning, by a second device, that a first device is in a first mode comprises:
receiving, by the access network device, an RRC message from the terminal device through a radio resource control RRC connection, and indicating, based on the RRC message, that the terminal device is in the first mode; and
the sending, by the second device, protocol information to the first device comprises:
sending, by the access network device, the protocol information to the terminal device based on a DRB between the access network device and the terminal device.

24. The communication method according to any one of claims 12 to 20, wherein the first device is a terminal device, and the second device is an access network device;
the learning, by a second device, that a first device is in a first mode comprises:
receiving, by the access network device, an RRC setup request message from the terminal device, and indicating, based on the RRC setup request message, that the terminal device is in the first mode; and
the sending, by the second device, protocol information to the first device comprises:
sending, by the access network device, the protocol information to the terminal device based on a DRB between the access network device and the terminal device.

25. The communication method according to any one of claims 22 to 24, wherein the communication method further comprises:
receiving, by the second device, a PDU session establishment request message from the terminal device; and
sending, by the second device, a PDU session establishment accept message to the terminal device, wherein the PDU session establishment accept message comprises a parameter for establishing a user plane connection, and the user plane connection corresponds to the DRB.

26. The communication method according to any one of claims 22 to 24, wherein the communication method further comprises:
generating, by the second device, a parameter for establishing a user plane connection; and
sending, by the second device to the terminal device, the parameter for establishing the user plane connection, wherein the user plane connection corresponds to the DRB.

27. The communication method according to any one of claims 12 to 20, wherein the first device is a terminal device, and the second device is an access network device;
the learning, by a second device, that a first device is in a first mode comprises:
receiving, by the access network device, an RRC setup request message from the terminal device, and indicating, based on the RRC setup request message, that the terminal device is in the first mode; and
the sending, by the second device, protocol information to the first device comprises:
sending, by the access network device, an RRC response message to the terminal device, wherein the RRC response message comprises the protocol information.

28. A communication apparatus, comprising units configured to perform the method according to any one of claims 1 to 27.

29. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 27.

30. A computer-readable storage medium, configured to store a computer program, wherein the computer program comprises instructions for implementing the method according to any one of claims 1 to 27.
